(19) Europäisches Patentamt
European Patent Office
Office européen des brevets

(11) EP 1 433 933 A2

(12) EUROPEAN PATENT APPLICATION

(43) Date of publication:
**30.06.2004 Bulletin 2004/27**

(21) Application number: **04006545.0**

(22) Date of filing: **09.06.1997**

(51) Int Cl.[7]: **F01N 3/08**, F01N 3/20, F01N 3/28, F02D 41/02, B01D 53/94

(84) Designated Contracting States:
**DE FR GB IT**

(30) Priority: **10.06.1996 JP 14698196**
**14.06.1996 JP 15371896**
**08.08.1996 JP 20958796**
**28.01.1997 JP 1365597**

(62) Document number(s) of the earlier application(s) in accordance with Art. 76 EPC:
**00109189.1 / 1 039 104**
**97925297.0 / 0 904 482**

(71) Applicant: **Hitachi, Ltd.**
**Chiyoda-ku, Tokyo 101-8010 (JP)**

(72) Inventors:
- **Hanaoka, Hiroshi**
  **Kodaira-shi Tokyo 187-0021 (JP)**
- **Kuroda, Osamu**
  **Hitachi-shi Ibaraki 316-0011 (JP)**
- **Doi, Ryouta**
  **Naka-gun Ibaraki 311-0107 (JP)**
- **Iizuka, Hidehiro**
  **Hitachinaka-shi Ibaraki 312-0057 (JP)**
- **Ogawa, Toshio**
  **Takahagi-shi Ibaraki 318-0014 (JP)**
- **Yamashita, Hisao**
  **Hitachi-shi Ibaraki 316-011 (JP)**
- **Azuhata, Shigeru**
  **Hitachi-shi Ibaraki 319-1225 (JP)**
- **Kitahara, Yuichi**
  **Hitachinaka-shi Ibaraki 312-0032 (JP)**
- **Hiratsuka, Toshifumi**
  **Hitachinaka-shi Ibaraki 312-0063 (JP)**
- **Okude, Kojiro**
  **Hitachi-shi Ibaraki 319-1225 (JP)**
- **Shinotsuka, Norihiro**
  **Hitachinaka-shi Ibaraki 312-0063 (JP)**
- **Manaka, Toshio**
  **Hitachinaka-shi Ibaraki 312-0052 (JP)**

(74) Representative: **Beetz & Partner Patentanwälte**
**Steinsdorfstrasse 10**
**80538 München (DE)**

Remarks:
This application was filed on 18-03-2004 as a divisional application to the application mentioned under INID code 62.

# (54) Exhaust gas purification apparatus of internal combustion engine and catalyst for purifying exhaust gas of internal combustion engine

(57) An exhaust gas purification apparatus for use in an internal combustion engine (99) is disclosed which comprises an exhaust gas duct connected to said engine (99), through which the exhaust gas flows, and a catalyst (18) disposed in said exhaust gas duct, for adsorbing NOx under lean combustion conditions. A manifold catalyst (19) may be disposed in said exhaust gas duct after the engine (99) upstream of said catalyst (18), which has the functions of a three way catalyst and a combustion catalyst. The manifold catalyst (19) arises its working temperature in a short time after engine starting in order to allow the purification of hydrocarbons (HC) and carbon monoxide (CO) immediately after engine starting. Alternatively a three way catalyst or a combustion catalyst may be disposed in said exhaust gas duct at the upstream of said catalyst (18).

FIG. 1

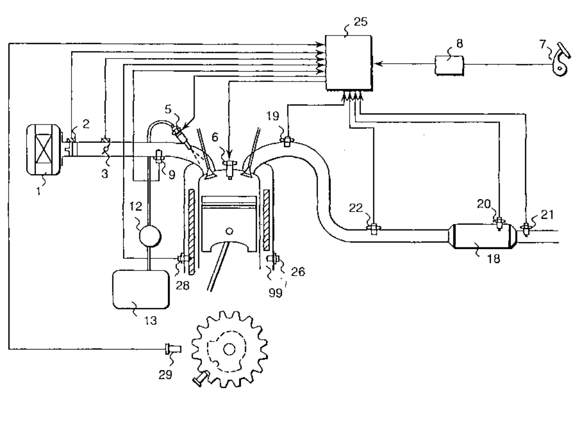

EP 1 433 933 A2

## Description

TECHNICAL FIELD

The present invention relates to a purification apparatus of an exhaust gas which is discharged or emitted from an internal combustion engine such as an automobile and, particularly relates to a purification apparatus for an exhaust gas and a catalyst for purifying an exhaust gas from an internal combustion engine which can be operated under a lean air-fuel ratio (a lean burn) and from an automobile which mounts that lean burn internal combustion engine.

BACKGROUND ART

An exhaust gas discharged from an internal combustion engine such an automobile includes carbon monoxide (CO), hydrocarbon (HC) and nitrogen oxide (NOx) etc.. Such CO, HC and NOx form air pollution materials and they have a bad influence on human body and further cause a problem where it disturbs the growth and the development of plants.

Accordingly, up to now a great deal of effort has gone into the reduction of an amount of pollutant, and in addition to the reduction of a generation amount of the pollutant according to an improvement of a combustion method in the internal combustion engine, a development for a method for purifying the discharged or the emitted exhaust gas using a catalyst etc. and it can obtain a steady result.

As to a gasoline engine vehicle, a main current is a method for employing a three component catalyst where platinum (Pt) and rhodium (Rh) are main active components and the oxidation of HC and CO and the reduction of NOx are carried out at the same time and the above air pollution materials are converted to harmless materials.

Herein, from the characteristics of the three component catalyst, the three component catalyst acts effectively only to the exhaust gas which generates according to the combustion at a vicinity of a stoichiometric air-fuel ratio, namely it is called as a "window".

By the above reasons, in the conventional technique, though the air-fuel ratio can fluctuate in accordance with an operation condition of the automobile. A fluctuation region is principally adjusted at a vicinity of the stoichiometric air-fuel ratio which is a ratio between A (weight of air) and F (weight of fuel) being about 14.7 in case of the gasoline. Hereinafter, in the present specification, the stoichiometric air-fuel ratio is represented by A/F = 14.7 but this value varies in accordance with kinds of the fuels.

However, in case where the engine is operated under a lean air-fuel ratio in comparison with the stoichiometric air-fuel ratio atmosphere, the fuel consumption can be improved. Therefore, the development for the lean burn combustion technique is promoted, in recently the automobile in which the engine is combusted under the lean area having the air-fuel ratio of more than 18 appears.

However, when a current three component catalyst is adopted for the purification of the lean burn exhaust gas, the oxidation purification with respect to HC and CO is performed but the reduction purification with respect to NOx is not effectively performed.

Accordingly, to promote an application of the lean burn system for a large scale size vehicle and an enlargement of the lean burn combustion time (an enlargement of an application operation area of the lean burn system), it is necessary to develop the exhaust gas purification technique which is suitable to the lean burn system.

As a result, the exhaust gas purification technique suitable to the lean burn system, namely the development of a technique for purifying HC, CO and NOx where a large quantity of oxygen ($O_2$) is included in the exhaust gas, in particularly a development of a technique for purifying NOx is promoted vigorously.

In Japanese patent laid-open publication No. 61,708/1988, it has proposed a technique where HC is supplied to an upstream of a lean burn exhaust gas and an ability for a catalyst is drawn out, where oxygen ($O_2$) concentration in the exhaust gas is lowered to a concentration area for effectively functioning the catalyst.

In Japanese patent laid-open publication No. 97,630/1987, Japanese patent laid-open publication No. 106,826/1987 and Japanese patent laid-open publication No. 117,620/1987, it has proposed a technique that N included in the exhaust gas (after the conversion of an easily absorbable $NO_2$ by oxidizing NO) is absorbed and removed by contacting to a catalyst having NOx absorbing ability. After at a time where an absorption efficiency lowers by stopping a passing-through of the exhaust gas an accumulated NOx is reduction-removed using $H_2$, HC included in a methane gas and a gasoline etc. and NOx absorbing ability of the catalyst is regenerated.

Further, in WO 93/07363 and WO 93/08383, it has proposed an exhaust gas purification apparatus in which NOx absorbent absorbs NOx from a lean exhaust gas and when an oxygen concentration in the exhaust gas is lowered NOx absorbent discharges the absorbed NOx, is arranged at an exhaust gas flow passage. And the exhaust gas absorbs NOx during the lean atmosphere and the absorbed NOx is discharged by lowering $O_2$ concentration in the exhaust gas which flows into a NOx absorbent.

However, in Japanese patent laid-open publication No. 61,708/1988, to attain a composition ($O_2$ concentration

having about 0.5 %) of the exhaust gas which corresponds to the air-fuel ratio of A/F = 14.7 where the catalyst can function, it needs much a large quantity of HC. A use of a blow-by gas in this patent document is effective but the blow-by gas has not an amount for efficient to treat an exhaust gas during an operation of an internal combustion engine. It is possible technically to throw the fuel but it results in that the fuel consumption eliminated according to the lean burn system will be lowered.

In Japanese patent laid-open publication No. 97,630/1987, Japanese patent laid-open publication No. 106,826/1987 and Japanese patent laid-open publication No. 117,620/1987, to regenerate a NOx absorbent a flow of an exhaust gas is stopped and the gaseous reducing agent of HC etc. is contacted to NOx absorbent. Further, two NOx absorbents are provided and to flow alternatively the exhaust gas to these two NOx absorbents it is necessary to provide an exhaust gas change-over mechanism, as a result a structure for the exhaust gas treatment apparatus becomes complicated one.

In WO 93/07363 and WO 93/08383, the exhaust gas is flowed continuously to NOx absorbent and the NOx in the exhaust gas is absorbed during the lean atmosphere and by lowering $O_2$ concentration in the exhaust gas the absorbed NOx is discharged and NOx absorbent is regenerated. Accordingly, since the change-over of the exhaust gas flow is unnecessary, the problem in the above stated system can dissolved. However, it set forth as a premise of an application of material which absorbs NOx during the lean condition and which can discharge Nox when $O_2$ concentration in the exhaust gas is lowered.

In case of the above material, since the performance of repeating NOx absorption and discharge causes inevitably a periodic change of a crystal structure of the absorbent, it is necessary to take a careful consideration about a durability of the absorbent.

Further, it is necessary to carry out a treatment for the discharged NOx and in case of a large quantity of the discharged NOx it may cause a post-treatment for the discharged NOx according to the three component catalyst.

## DISCLOSURE OF INVENTION

In the light of the problems in the above stated prior arts, the present invention is to provide an exhaust gas purification apparatus of an internal combustion engine wherein the purification apparatus having a simple structure of an exhaust gas treatment apparatus, a small consumption amount of the gaseous reducing agents, a superior endurance property and wherein a harm component such as NOx from a lean burn exhaust gas in the internal combustion engine can be effectively removed and can be converted to a harmless component.

Further, the present invention is to provide a catalyst for use in the exhaust gas purification apparatus of an internal combustion engine.

According to the present invention, an exhaust gas purification apparatus for use in an internal combustion engine comprises an exhaust gas duct connected to the engine through which the exhaust gas containing NOx gas passes and a catalyst so disposed in the exhaust gas duct that it contacts with the exhaust gas.

The catalyst chemically adsorbs NOx under the condition that a stoichiometric amount of a gaseous oxidizing agent present in the exhaust gas is larger than that of a gaseous reducing agent present in the exhaust gas for reducing NOx, while NOx being adsorbed is catalytically reduced in the presence of the reducing agent under the condition that the stoichiometric amount of the oxidizing agent is not larger that of the reducing agent.

According to the present invention, an apparatus for purifying an exhaust gas from an internal combustion engine comprises an exhaust gas duct connected to the engine through which the exhaust gas containing NOx gas passes, and a catalyst so disposed in the exhaust gas duct that it contacts with the exhaust gas.

The catalyst adsorbs NOx under the condition that an amount of a gaseous oxidizing agent present in the exhaust gas is larger than that of a gaseous reducing agent added to the exhaust gas for NOx in a stoichiometric relation, while NOx being adsorbed is catalytically reduced in the presence of the reducing agent under the condition that the amount of the oxidizing agent is not larger that of the reducing agent in the stoichiometric relation.

According to the present invention, an apparatus for purifying an exhaust gas from an internal combustion engine comprises an exhaust gas duct connected to the engine through which the exhaust gas containing NOx gas passes, and a catalyst so disposed in the exhaust gas duct that it contacts with the exhaust gas.

The catalyst adsorbs NOx under the condition that a stoichiometric amount of a gaseous oxidizing agent present in a lean combustion exhaust gas is larger than that of a gaseous reducing agent present in the lean combustion exhaust gas for reducing NOx, while NOx being adsorbed is catalytically reduced in the presence of the reducing agent under the condition that a stoichiometric amount of the oxidizing agent is not larger that of the reducing agent in a stoichiometric or fuel rich combustion exhaust gas.

According to the present invention, an apparatus for purifying an exhaust gas from an internal combustion engine comprises an exhaust gas duct connected to the engine through which the exhaust gas containing NOx gas passes, a device for controlling an air-fuel ratio of the exhaust gas, and a catalyst so disposed in the exhaust gas duct that it contacts with the exhaust gas.

The air-fuel ratio is switched from the condition that the catalyst chemically adsorbs NOx under in the lean combustion exhaust gas to the condition that to the condition that NOx being adsorbed is catalytically reduced in the presence of the reducing agent in a stoichiometric or fuel rich combustion exhaust gas. The catalyst according to the present invention comprises a heat resistant carrier body and catalytic compounds supported on the carrier body and comprising at least one of sodium and potassium, at least one of magnesium, strontium and calcium, and at least one of platinum, palladium and rhodium.

The catalyst according to the present invention comprises a base member, a heat resistant carrier body supported on the base member and catalytic compounds supported on the carrier body and comprising at least one of sodium and potassium, at least one of magnesium, strontium and calcium, and at least one of platinum, palladium and rhodium.

According to the present invention, the reducing agent to be added to the lean combustion exhaust gas is at least one of gasoline, light oil, kerosene, natural gas, their reformed substances, hydrogen, alcohol, ammonia gas, engine blow-by gas and canister purging gas.

The reducing agent is supplied to the lean combustion exhaust gas in response to signals from'the stoichiometric establishing unit.

According to the present invention an exhaust gas purification apparatus further comprises a manifold catalyst disposed in the exhaust gas duct immediately after the engine at the upstream of the catalyst, the catalyst having functions of a three component catalyst and a combustion catalyst.

According to the present invention, in the exhaust gas purification apparatus, a second catalyst is disposed in the exhaust gas duct of a fuel direct injection in-cylinder engine.

According to the present invention, the exhaust gas purification apparatus further comprises a three component catalyst or a combustion catalyst is disposed in the exhaust gas duct at the upstream of the catalyst.

According to the present invention, an apparatus for purifying an exhaust gas from an internal combustion engine comprising, an exhaust gas duct connected to the engine through which the exhaust gas containing NOx, SOx and oxygen passes, and a catalyst which chemically adsorbs NOx under the condition that the exhaust gas is emitted from lean combustion, and NOx being adsorbed is catalytically reduced under the condition that a gaseous reducing agent is added to the lean combustion exhaust gas in such an amount that a stoichiometric amount that a stoichiometric amount of oxygen is not larger than that of the reducing agent.

The catalyst adsorbs or absorbs in the lean condition and releases SOx in the stoichiometric or rich condition.

According to the present invention, a catalyst for purifying an exhaust gas from an internal combustion engine which comprises, a base member, a heat resistant carrier body supported on the base member, and catalyst components supported on the carrier body, the carrier body having a number of small hollows extending in the direction of gas flow of the exhaust gas.

According to the present invention, the catalyst compounds comprises at least one of alkali metals, at least one of alkali earth metals other than barium, at least one of noble metals and at least one of rare earth metals.

According to the present invention, an exhaust gas purification apparatus for use in an internal combustion engine comprising, a catalyst for chemically adsorbing NOx under a condition where an gaseous oxidizing agent is more than a gaseous reducing agent in a stoichiometric relation between the gaseous oxidizing agent and the gaseous reducing agent and for catalytic-reducing an adsorbed NOx under a condition where the gaseous reducing agent is equal to or is more than the gaseous oxidizing agent. The catalyst is provided in an exhaust gas flow passage where an exhaust gas generated at a lean air-fuel ratio and at a rich air-fuel ratio or a stoichiometric air-fuel ratio is flowed into.

According to the present invention, an exhaust gas purification apparatus for use in an internal combustion engine comprising a catalyst for chemically adsorbing NOx under a condition where an gaseous oxidizing agent is more than a gaseous reducing agent in a stoichiometric relation between the gaseous oxidizing agent and the gaseous reducing agent and a device which controls an air-fuel ratio to switch conditions between NOx chemical adsorption to the catalyst and catalytic-reduction chemically of NOx to the catalyst.

According to the present invention, an exhaust gas purification apparatus comprises a catalyst which chemically adsorbs NOx under a condition where in a stoichiometric relation between gaseous oxidizing agent and gaseous reducing agent in an exhaust gas flowing an exhaust gas flow passage in the internal combustion engine the gaseous oxidizing agent is more than the gaseous reducing agent and catalytic-reduces an adsorbed NOx under a condition where the gaseous oxidizing agent is equal to or is more than the gaseous reducing agent is provided in the exhaust gas flow passage where an exhaust gas burned at a lean air-fuel ratio and an exhaust gas burned at a rich or stoichiometric air-fuel ratio flow into alternatively.

The exhaust gas purification apparatus according to the present invention comprises a stoichiometric relation between oxidation and reduction of gaseous oxidizing agent and gaseous reducing agent control means for controlling the stoichiometric relation between gaseous oxidizing agents and gaseous reducing agents comprises a timing establishment means for establishing a timing in which the stoichiometric relation between gaseous oxidizing agent and gaseous reducing agent for changing over from one condition of the gaseous oxidizing agent being more than the gaseous reducing agent to another condition of the gaseous reducing agent being equal to or being more than the gaseous oxidizing agent, and comprises a gaseous reducing agent excess time establishment means for establishing a time which, in the stoichiometric relation between oxidation and reduction, is established under a condition where the gaseous reducing agent is held to being equal to or being more than the gaseous oxidizing agent.

According to the present invention, a catalyst has an ability for catching NOx according to the chemical adsorption and an ability for catalytic-reducing NOx. Even when the oxygen concentration lowers the catalyst does not discharge NOx. These abilities can be obtained by the catalyst which comprises at least one element selected from alkali metals and alkali earth metals in the element periodic table but not including barium (Ba) and at least one selected from noble metals comprising of platinum (Pt), palladium (Pd) and rhodium (Rh). Further, the catalyst has an ability for catalytic-oxidizing HC or CO etc..

The catalyst has a high NOx absorption ability under the lean atmosphere and further under the catalyst temperature of 250-500 °C. Further, to recover NOx adsorbing ability in accordance with the reduction of the absorbed NOx, it is seen that the catalyst must maintain a time of about 30 seconds or less than 30 seconds under the stoichiometric atmosphere or the rich atmosphere.

Accordingly, to perform effectively NOx adsorption and to recover NOx adsorbing ability, it is desirable to provide the catalyst at a position of an exhaust gas duct where an inlet port gas temperature of the catalyst is 250-500 °C. The above temperature range is one which can obtain normally under the car-body floor.

NOx adsorbing ability of the catalyst is lowered because that the catalyst suffers from poisoning by SOx originated fuel (gasoline). It is seen that, when the catalyst which suffered from poisoning by SOx is maintained several minutes or ten (10) minutes at 400-800 °C under the stoichiometric atmosphere or the rich atmosphere, SOx is removed and then NOx adsorbing ability is recovered.

Accordingly, under the condition where the gasoline quality is bad (high sulfur content) and the catalyst suffers from poisoning by SOx, it is desirable to provide the catalyst at a position of an exhaust gas duct where an inlet port gas temperature of the catalyst is 400-800 °C. The above temperature range is one which can obtain under the car-body floor.

In case where the catalyst is used as the catalyst for an automobile, it is desirable to form the honeycomb catalyst having NOx adsorption ability of more than 0.01 mol per an apparent honeycomb volume one (1) litter.

Further, it is desirable to set the specific surface area of the catalyst layer on the honeycomb substrate (the honeycomb base body) measured by absorbing nitrogen according to BET method being more than 50 $m^2/g$.

In the exhaust gas, the gaseous oxidizing agents are $O_2$, NO, $NO_2$ etc. and are mainly oxygen. The gaseous reducing agents are HC supplied in an internal combustion engine, HC (including oxygen containing hydrocarbon) generated in a combusting process as a derivative from fuel, CO, $H_2$ etc. and further a reducing material of such as HC which is added in the exhaust gas as a reducing component.

When the lean exhaust gas is contacted with the three component catalyst, HC, CO, $H_2$ etc. as the gaseous reducing agents for reducing NOx to nitrogen ($N_2$) cause a combustion reaction with oxygen ($O_2$) as the gaseous oxidizing agent in the exhaust gas. And NOx (NO and $NO_2$) reacts with these gaseous reducing agents and is reduced to nitrogen ($N_2$). In normally, since both reactions proceed in parallel, a utilization rate of the gaseous reducing agents for reducing NOx is low.

In particularly, at a high temperature more than 500 °C of a reaction temperature (it depends on a catalyst material), an occupation rate of the latter reaction becomes large. Hence, by separating NOx from the exhaust gas using the catalyst (at least it separates from $O_2$ in the exhaust gas) and after that by carrying out the catalytic-reaction with the gaseous reducing agents it is possible to carry out effectively the reduction of NOx to $N_2$. According to the present invention, using the catalyst NOx in the lean exhaust gas is adsorption-removed, NOx in the exhaust gas is separated from $O_2$.

Next, according to the present invention, with regard to the oxidation reduction relation, namely the stoichiometric relation between oxidation and reduction, which is constituted by the gaseous oxidizing agents ($O_2$ and NOx etc.) and the gaseous reducing agents (HC, CO, $H_2$ etc.) in the exhaust gas, the condition where the gaseous reducing agent is equal to or is larger than the gaseous oxidizing agent is made and NOx absorbed on the catalyst is reduced to $N_2$ according to the catalytic-reaction with the gaseous reducing agent such as HC.

NOx in the exhaust gas is substantially constituted of NO and $NO_2$. The reaction property $NO_2$ is rich in comparison with that of NO. Accordingly, when NO is oxidized to $NO_2$, the adsorption-removal and the reduction of NOx in the exhaust gas are performed easily.

The present invention includes a method of oxidizing NOx in the exhaust gas to $NO_2$ by the coexistent $O_2$ and then remove, and an oxidation means for attaining the above method such as the means having NO oxidation function and the means for providing an oxidation catalyst at a pre-stage of the catalyst.

The reduction reaction of a chemically adsorbed $NO_2$ according to the present invention will be described generally with following reaction formulas.

$$MO\text{-}NO_2 + HC \rightarrow MO + N_2 + CO_2 + H_2O$$

$$\rightarrow MCO_3 + N_2 + H_2O$$

Herein, M indicates a metal element and $MO\text{-}NO_2$ indicates a combination state of $NO_2$ of a metal oxide surface. A reason for employing $MCO_3$ as the reduction generation substance will be explained in a latter stated portion.
The above reaction is an exothermic reaction. As the metal M, alkali metals and alkali earth metals are taken up, and by representing Na and Ba respectively the reaction heat is estimated. It becomes as following under a standard condition (1 atmosphere, 25 °C).

$$2NaNO_3\ (s) + 5/9C_3\ H_6\ (g) \rightarrow$$

$$2Na_2NO_3,\ (s) + N_2\ (g) + 2/3CO_2\ (g) + 5/3CO_2\ (g)$$

$$[-\Delta H = 873\ k\ joule]$$

$$Ba(NO_3\ )_2\ (s) + 5/9C_3H_6\ (g) \rightarrow$$

$$BaCO_3\ (s) + N_2\ (g) + 2/3CO_2\ (g) + 5/3H_2O\ (g)$$

$$[-\Delta H = 751\ k\ joule]$$

Herein, s indicates a solid state and g indicated a gaseous state.
Here, a thermodynamical value of the solid state is used as that of an adsorbed state.
Incidentally, the combustion heat of $C_3H_6$ 5/9 mole is 1,070 k joule and each of the above reactions is exothermic heat being a match for the combustion heat of HC.
As a matter of course, this exothermic heat is transferred to the exhaust gas and then a local raise in temperature of a surface of the catalyst can be restrained.
In case that catching agent for NOx is NOx absorbent, since NOx which is picked up in a bulk of the absorbent is reduced, there is a limitation for heat transfer to the exhaust gas, accordingly a raise in temperature of the absorbent causes. This exothermic heat shifts balance of the absorption reaction to a side of NOx discharging or NOx emission.

absorption →

$$MCO_3\ (s) + 2NO_2 + 1/2O_2 \leftarrow \rightarrow M(NO_3)_2 + CO_2$$

← discharging

Even though the concentration of the gaseous reducing agents is heightened to reduce rapidly NOx concentration in the exhaust gas which is discharged to an outside of the absorbent, the reaction between $NO_2$ and HC in the gaseous phase doe not proceed.
Accordingly, the discharging amount of NOx can not reduce fully by an increment of the gaseous reducing agents. Further, at a stage where the adsorption amount of NOx is small, a reduction operation may carry out, however since the regeneration frequency of NOx absorbent increases, it is not put in a practical use.
The catalyst according to the present invention generates a small absolute amount exothermic heat so as to catch NOx at a vicinity of the surface thereof in accordance with the chemical adsorption and also the arise in temperature of the catalyst is small so as to transfer the heat rapidly to the exhaust gas. Accordingly, it is possible to prevent the discharging of the once caught NOx.
The catalyst according to the present invention is characterized to the material which catches NOx at the surface thereof in accordance with the chemical adsorption and the material which does not cause NOx discharging or NOx emission in accordance with the exothermic reaction during the reduction of NOx.
Further, the catalyst according to the present invention is characterized to the material which catches NOx at the surface thereof in accordance with the chemical adsorption or at a vicinity of the surface thereof in accordance with a chemical combination and the material which does not cause NOx discharging in accordance with the exothermic reaction during the reduction of NOx.

Further, the catalyst according to the present invention is characterized to catch NOx contained in the lean exhaust gas at the surface thereof in accordance with the chemical adsorption and during the reduction of NOx this catalyst is a material which does not cause NOx discharging in accordance with the lowering of the oxygen concentration.

The inventors of the present invention found out that the above stated characterizations can realize using a catalyst which is selected from at least one of alkali metals and alkali earth metals classified in an element periodic table and at least one of noble metals selected from platinum (Pt), rhodium (Rh) and palladium (Pd) but does not contain barium (Ba). Preferably, the catalyst according to the present invention includes at least one kind element selected from potassium (K), sodium (Na), and strontium (Sr), and noble metal elements.

The exhaust gas purification apparatus according to the present invention arranges at an exhaust gas flow passage the catalyst including at least one kind element selected from potassium (K), sodium (Na), magnesium (Mg), strontium (Sr) and calcium (Ca) and noble metal elements.

In the exhaust gas purification apparatus, in the stoichiometric relation between oxidation and reduction of each of the components included in the exhaust gas, it forms the condition where the gaseous oxidizing agent is equal to or is more than the gaseous reducing agent and NOx is chemically adsorbed on the catalyst, next it forms the condition where the gaseous reducing agent is equal to or is more than the gaseous oxidizing agent, thereby NOx absorbed on the catalyst is reduced according to the catalytic-reaction with the gaseous reducing agent to harmless $N_2$.

The catalyst in the present invention can be applied suitably in particular by following substances.

The composition is constituted of a metal and a metal oxide substance (or a complex oxide substance) which contains at least one selected from potassium (K), sodium (Na), magnesium (Mg), strontium (Sr) and calcium (Ca), at least one selected from rare earth metals, and at least one of elements selected from noble metals including platinum (Pt), rhodium (Rh), and palladium (Pd). This composition is one which these elements are supported on a porous heat-withstanding metal oxide substance. This composition has a superior NOx adsorbing ability.

As the earth metal element, cerium (Ce) or lanthanum (La) is preferable, in particularly Ce is preferable. The earth metal element has a function for exhibiting the three component function to the catalyst under the stoichiometric atmosphere or the rich atmosphere.

At least one of titanium (Ti) and silicon (Si) can be added to the catalyst according to the present invention. Accordingly, the heat resistant property and SOx endurance property of the catalyst can be improved. Ti or Si has a function for adsorbing or absorbing SOx under the lean atmosphere or for discharging the adsorbed SOx or the absorbed SOx under the stoichiometric atmosphere or the rich atmosphere.

In the catalyst of the present invention, alkali metals, alkali earth metals, noble metals, rare earth elements, titanium (Ti) and silicon (Si) are held on the porous support or the porous carrier member and the porous support or the porous carrier member supported or carried on a substance body. As the porous support, from an aspect of the heat resistant property or the heat resistant ability, $\gamma$-$Al_2O_3$ can be preferably employed. As the substance body, a cordierite, mullite, a metal, for example, a stainless steel can be preferably employed.

As the crystal structure of Ti which is held on the porous support, an amorphous oxide state is preferable. Further, in case where the catalyst includes Si and alkali earth metals at the same time, as both the crystal structures Si and alkali earth metals, an amorphous oxide state is preferable.

In the catalyst of the present invention, to the porous support (porous carrier member) of 100 wt% it is preferable to include alkali metals of 5-20 wt%, and to the porous support of 100 wt% it is preferable to include alkali earth metals of 3-40 wt%. Further, to the porous support of 100 wt%, it is preferable to include Pt of 0.5-3 wt%, Rh of 0.05-0.3 wt%, and Pd of 0.5-15 wt%, respectively. Mg has a function for preventing the cohesion or the condensation of the active components which are held on the porous support, such as the noble metal.

To the porous support of 100 wt%, it is preferable to include the rare earth metals of 5-30 wt%. To the porous support of 100 wt%, it is preferable to include Ti of 0.1-30 wt%, and to the porous support of 100 wt%, it is preferable to include Si of 0.6-5 wt% as silica.

The present invention provides the catalyst which comprises of, on the porous support, sodium (Na), magnesium (Mg), and at least one element selected from platinum (Pt), palladium (Pd), and rhodium (Rh), and at least one selected from cerium (Ce) and lanthanum (La) are held, and further to the porous support of 100 wt%, Na of 5-20 wt%, Mg of 1-40 wt% under a weight ratio Mg/(Na + Mg), Pt of 0.5-3 wt%, Rh of 0.05-0.3 wt%, and Pd of 0.5-15 wt% are included.

In the exhaust gas purification apparatus according to the present invention, to chemically adsorb NOx to the catalyst or catalytic-reduce the chemically adsorbed NOx, it requires the means for controlling the stoichiometric relation between oxidation and reduction by the gaseous oxidizing agents and the gaseous reducing agents in the exhaust gas. By the provision of the stoichiometric relation between oxidation and reduction control means, it can carry out the operation for forming the condition where the gaseous reducing agent is equal to or is more than the gaseous oxidizing agent, namely, for example, the combustion condition in the internal combustion engine is made to the stoichiometric air-fuel ratio or to the fuel excess (the rich), or the gaseous reducing agent is added to the lean burn exhaust gas.

The former can be attained by a following method.

A method is one the fuel injection amount is controlled in accordance with the output of the oxygen concentration sensor and the output of the intake air flow amount sensor provided in the exhaust gas duct. In this method, a part of the plural cylinders is made under the fuel excess and the remainder thoseof is made under the fuel shortage, and the components of the mixture exhaust gas from the whole cylinders form the condition where the gaseous reducing agent is equal to or is more than the gaseous oxidizing agent in the stoichiometric relation between the oxidation and the reduction.

The latter can be attained by each of following methods.

A method is one the gaseous reducing agent is thrown at the upstream of the catalyst in the exhaust gas flow. As the gaseous reducing agent, gasoline, light gas oil, natural gas, reforming material thoseof, hydrogen, alcohol materials and ammonium materials can be applied. It is effective to introduce the blow-by gas and the canister purging gas at the upstream of the catalyst and to throw the gaseous reducing agent such as hydrocarbon (HC) contained in the above materials. In the fuel direct injection system internal combustion engine, it is effective to inject the fuel during the exhausting process and to throw the fuel as the gaseous reducing agent.

As the catalyst in the present invention, the various kinds of shapes can be applied. In addition to the honeycomb shape which is obtained by coating the catalyst components to the honeycomb shape structure member comprised of cordierite or metal materials such as a stainless steel, the pellet shape, the plate shape, the particle shape and the powder shape can be applied.

In the present invention, the apparatus can provide the means for establishing the timing where the gaseous reducing agent is equal to or is more than the gaseous oxidizing agent. The above timing is obtained by each of following methods.

The timing is one in accordance with the air-fuel ratio setting signal which is determined by ECU (engine control unit), the engine rotation number signal, the inhale air amount signal, the intake air pipe pressure signal, the speed signal, the throttle valve opening degree signal, the exhaust temperature etc., NOx discharging amount during the lean operation time is estimated and the integration value thereof is exceeds over a predetermined setting value.

The timing is one, in accordance with the signal of the oxygen sensor (or A/F sensor) arranged at the upstream or the downstream of the catalyst in the exhaust gas flow passage, the accumulated oxygen amount is detected, and the accumulated oxygen amount exceeds over a predetermined amount. As a modified embodiment, the accumulated oxygen amount during the lean operation time exceeds over a predetermined amount.

The timing is one, in accordance with the signal of NOx sensor arranged at the upstream of the catalyst in the exhaust gas flow passage, the accumulated NOx amount is detected, and the accumulated NOx amount during the lean operation time exceeds over a predetermined amount.

The timing is one, in accordance with the signal of NOx sensor arranged at the downstream of the catalyst in the exhaust gas flow passage, NOx concentration is detected, and NOx concentration exceeds over a predetermined concentration.

According to the present invention, further the apparatus provides the means for establishing the maintenance time where the gaseous reducing agent is equal to or is more than the gaseous oxidizing agent. The maintain time of the gaseous reducing agent excess condition and the throw-in gaseous reducing agent amount can be determined taking into the consideration of the specifications and the characteristics of the adsorbent and the internal combustion engine. The above methods can be realized by adjusting the stroke, the injection time and the injection interval of the fuel injector.

## BRIEF DESCRIPTION OF DRAWINGS

Fig. 1 is a constructive view showing a representative embodiment of an exhaust gas purification apparatus for use in an internal combustion engine according to the present invention;

Fig. 2 is a time lapse characteristic of NOx purification rate where a rich operation and a lean operation are repeated alternatively in accordance with a method for purifying an exhaust gas of an internal combustion engine according to the present invention;

Fig. 3 is a relationship between NOx concentration and NOx purification rate in a lean exhaust gas;

Fig. 4 is NOx purification rate in a stoichiometric exhaust gas;

Fig. 5A and 5B are relationships between an inlet port NOx purification rate and an outlet port NOx purification rate of a catalyst in case where a rich (stoichiometric) operation is changed over to a lean operation;

Fig. 6A and 6B are relationships between an inlet port NOx purification rate and an outlet port NOx purification rate of a catalyst in case where a rich (stoichiometric) operation is changed over to a lean operation;

Fig. 7 a block diagram showing a method for controlling an air-fuel ratio
Fig. 8 is a flow chart showing a method for controlling an air-fuel ratio;;
Fig. 9 is a flow chart showing a method for accumulating NOx discharging amount during a lean operation;
Fig. 10 is a flow chart showing NOx amount assumption in the flow chart shown in Fig. 8;
Fig. 11 is a flow chart showing NOx amount assumption in the flow chart shown in Fig. 8;
Fig. 12 is a flow chart showing NOx amount assumption in the flow chart shown in Fig. 8;
Fig. 13 is a flow chart showing NOx amount assumption in the flow chart shown in Fig. 8;
Fig. 14 is a constructive view showing an embodiment of an exhaust gas purification apparatus on which a manifold catalyst is provided;
Fig. 15 is a constructive view showing an embodiment of an exhaust gas purification apparatus in a fuel direct injection in-cylinder engine;
Fig. 16 is a constructive view showing an embodiment of an exhaust gas purification apparatus on which a post-catalyst is provided;
Fig. 17 is a constructive view showing an embodiment of an exhaust gas purification apparatus in which a gaseous reducing agent is added to an upstream of a catalyst;
Fig. 18A, 18B and 18C are views showing NOx purification characteristic where a mode operation is carried out;
Fig. 19 is a graph showing NOx purification characteristic where an oxygen concentration is varied using a model gas;
Fig. 20 is a graph showing NOx purification characteristic where an oxygen concentration is varied using a model gas;
Fig. 21 is a view showing NOx purification rate for optimizing Na supported amount;
Fig. 22 is a view showing NOx purification rate for optimizing Mg supported amount;
Fig. 23 is a view showing NOx purification rate for optimizing Ce supported amount;
Fig. 24 is a view showing NOx purification rate for optimizing Rh and Pt supported amount;
Fig. 25 is a view showing NOx purification rate for optimizing Pd and Pt supported amount; and
Fig. 26 is a view showing NOx purification rate for optimizing Sr supported amount.

BEST MODE FOR CARRYING OUT THE INVENTION

Hereinafter, one embodiment of an exhaust gas purification apparatus and an exhaust gas purification catalyst for use in an internal combustion engine according to the present invention will be explained. However, the present invention will not be limited within following embodiments.

<u>Characteristics and Representative Embodiments of Catalyst</u>

The characteristics of a catalyst for use in an internal combustion engine in accordance with a method according to the present invention will be explained.

(Catalyst Preparation Method)

A catalyst N-N9 was obtained according to a following method.
Nitric acid alumina slurry was obtained by mixing alumina powders with alumina-sol obtained by peptizing boehmite by nitric acid. After a cordierite honeycomb was immersed in the slurry and the cordierite honeycomb was pulled up rapidly. The slurry enclosed in a cell was removed by performing an air-blow process, after the drying of the honeycomb the honeycomb was calcined at 450 °C.
The above processes was carried out repeatedly and the alumina of 150 g per 1 (one) litter of an apparent volume of the honeycomb was coated.
On this alumina coated honeycomb catalyst active components were held and then a honeycomb shape catalyst was obtained.
In concretely, the alumina coated honeycomb was immersed in cerium nitrate ($Ce(NO_3)_2$) solution and the honeycomb was dried at 200 °C and after the drying the honeycomb was calcined for 1 (one) hour at 600 °C. In succession, it is immersed in a mixture liquid comprised of sodium nitrate ($NaNO_3$) solution, titania-sol solution and magnesium nitrate ($Mg(NO_3)_2$) solution, after the honeycomb was dried at 200 °C the honeycomb was calcined for 1 (one) hour at 600 °C.
Further, the honeycomb was immersed in a mixture solution comprised of dinitrodiamime Pt nitrate solution and rhodium nitrate ($Rh(NO_3)_2$) solution, and then after the honeycomb was dried at 200 °C the honeycomb was calcined for 1 (one) hour at 450 °C. In finally, it is immersed in magnesium nitrate ($Mg(NO_3)_2$) solution and after the honeycomb was dried at 200 °C the honeycomb was calcined for 1 (one) hour at 450 °C.

With the above process, the honeycomb shape catalyst was obtained, this catalyst was one where Ce, Mg, Na, Ti, Rh and Pt were held on alumina ($Al_2O_3$) and is 2Mg - (0.2Rh, 2.7Pt) - (18Na, 4Ti, 2Mg) - 27Ce/$Al_2O_3$. Herein, /$Al_2O_3$ shows that the active component was held on $Al_2O_3$ , a numerical value before the element is weight (g) of an indicated metal component which was supported per 1 (one) litter of the apparent volume of the honeycomb.

An expressed order shows a support order or a carrier order and the elements were held in accordance with an order of the component for separating from the expressed component near to $Al_2O_3$, namely, on $Al_2O_3$, 27Ce, (18Na, 4Ti, 2Mg), (0.2Rh, 2.7Pt), and 2Mg are held in sequence, and the component bound up with parenthesis were supported at the same time. Incidentally, a support amount of the respective of the active components was enable varied by varying the active component concentration in the immersed solution.

A catalyst N-K9 was prepared according to a following method.

In place of sodium nitrate ($NaNO_3$) solution used in the preparation for the catalyst N-N9, potassium nitrate ($KNO_3$) solution was used and others were a similar method for preparing the catalyst N-N9. As a result, the catalyst N-K9 comprised of 2Mg - (0.2Rh, 2.7Pt) - (18K, 4Ti, 2Mg) - 27Ce/$Al_2O_3$ was obtained.

Further, with a similar method, a comparison catalyst N-R2 comprised of 2Mg - (0.2Rh, 2.7Pt) - 27Ce/$Al_2O_3$ was obtained.

(Performance Evaluation Method)

After the catalysts obtained by the above stated methods were thermally treated at 700 °C under an oxidizing atmosphere for 5 (five) hours, the characteristics were evaluated using following methods.

On an automobile in which a lean burn gasoline engine was mounted having the displacement volume of 1.8 litters, the honeycomb shape catalysts having a volume of 1.7 litters prepared using the above stated methods were mounted and then NOx purification characteristics were evaluated.

(Characteristics of Catalysts)

The catalyst N-N9 was mounted and a 30 seconds period of a rich operation having A/F = 13.3 and an about 20 minutes period of a lean operation having A/F = 22 were repeated alternatively and then NOx purification characteristics shown in Fig. 2 were obtained.

In case where the fuel is the gasoline, a mass composition of the gasoline comprises carbon (C) of about 85.7 % and hydrogen (H) of about 14.3 %. Herein, when the gasoline of F (g) is burned, carbon (C) of 0.857 x F (g) reacts with oxygen ($O_2$) of 0.857F/12 mol and hydrogen (H) of 0.143 x F (g) reacts with oxygen ($O_2$) of 0.143F/4 mol. A necessary air amount A (g) is expressed as following:

$$A = ((0.857/12 + 0.143/4)F \times 28.8) / 0.21 = 14.7F$$

herein, 28.8 is air molecular amount (g/mol) and 0.21 is oxygen ($O_2$) amount rate in air.

A/F = 14.7 indicates a stoichiometric air-fuel ratio.

Accordingly, under A/F = 13.3, to the fuel (a gaseous reducing agent) of F (g), it shows an insufficient condition (a reduction atmosphere) of the air (the gaseous oxidizing agent) of 1.39F (g). On the other hand in case of A/F = 22, to the fuel of F (g), it shows an excess condition (an oxidization atmosphere) of the air (the gaseous oxidizing agent) of 7.31F (g).

From understood in this figure (Fig. 2), NOx during the lean operation time was purified in accordance with this catalyst.

NOx purification rate during the lean operation time was decreased gradually and the purification rate having 100 % at an initial period became about 40 % after 20 minutes. However, the lowered purification rate was recovered to 100 % under 30 seconds period of the rich operation. When the lean operation was carried out again NOx purification performance was recovered and the above stated change in time lapse was repeated.

Even when the lean operation and the rich operation were repeated in plural times, the velocity of the lowering in time lapse of NOx purification rate during the lean operation was unchanging, this shows that NOx absorption performance was fully regenerated according to the rich operation.

The vehicle speed was about 40 km/h constant (the exhaust gas space velocity (SV) was about 20,000/h constant) and NOx concentration in the exhaust gas was varied by varying the ignition periods and the relationship between NOx concentration and NOx purification rate in the lean exhaust gas was determined and then Fig. 3 was obtained.

NOx purification rate was lowered in lapse of time, however more NOx concentration lowered more the lowering speed was small. Until to reach NOx purification rates 50% and 30%, the catching NOx amount was estimated through Fig. 3 and was as shown in Table 1.

Table 1

| NOx concentration in NOx inlet port exhaust gas (ppm) | amount purified until purification rate 50% (mol) | NOx amount purified until purification rate 30% (mol) |
|---|---|---|
| about 50 | 0.030 | 0.041 |
| about 120 | 0.031 | 0.047 |
| about 230 | 0.030 | 0.045 |
| about 450 | 0.030 | 0.042 |
| about 550 | 0.026 | 0.038 |

NOx catching amounts were substantially constant in regardless of NOx concentration. The absorption amount did not depend to the concentration (the pressure) of the adsorbent and this is a feature of the chemical adsorption.

In the test catalysts, first of all there were Pt particles as NOx absorption medium. A result of CO adsorption amount evaluation which is frequently used as means for evaluating the exposed Pt amount was carried out, and CO adsorption amount (at 100 °C) was $4.5 \times 10^{-4}$ mol. This value was about 1/100 of the above stated NO adsorption amount and therefore it was clear that Pt does not work as a main role for NOx adsorbent.

On the other hand, BET surface area (measured by nitrogen adsorption) of this catalyst (including cordierite as a substrate) was measured about 25 $m^2$/g and was 28,050 $m^2$ per the honeycomb 1.7 litters. Further, the chemical structure about Na of the catalyst according to the present invention was studied. From the facts that $CO_2$ gas was generated and dissolved in an inorganic acid and from a value of a point of inflection in a pH neutralization titration curve line, it was judged Na existed mainly as $Na_2CO_3$.

Supposing all of the surface was occupied by $Na_2CO_3$, $Na_2CO_3$ of 0.275 mol would be exposed on the surface. (As the specific gravity of $Na_2CO_3$ is 2.533 g/mol, the volume of one molecular of $Na_2CO_3$ can be estimated. Supposing $Na_2CO_3$ is a cube, an area of one face of $Na_2CO_3$ was estimated and the estimated area was used as the occupation area of the surface $Na_2CO_3$ ).

In accordance with the above stated reaction formula, $Na_2CO_3$ of 2.75 mol has an ability for adsorbing $NO_2$ of 0.55 mol. However, NOx amount which had been removed by the catalyst according to the present invention has an order of 0.04 mol which is less than 1/10 of the ability.

The above difference attributed the cause that BET method evaluated the physical surface area and the surface area of $Al_2O_3$ with the surface area of $Na_2CO_3$ was evaluated.

The above stated evaluations show the adsorbed NOx amount was far and way NOx catching power of $Na_2CO_3$ bulk and at least NOx was caught at a limited area of the surface or the vicinity of the surface of $Na_2CO_3$.

Further, in Fig. 3, the velocity of the lowering in the purification rate lowered at about NOx purification rate of 20%, however this shows that the reducing reaction caused according to the catalyst function.

Fig. 4 shows NOx purification rate of the immediately after time where the lean operation has changed over to the stoichiometric operation.

Fig. 5A and 5B show NOx purification characteristic of the time where the lean operation has changed over to the stoichiometric operation, and Fig. 6A and 6B show NOx purification characteristic of the time where the lean operation has changed over to the rich operation.

Fig. 5A and 5B shows NOx concentrations of an inlet port and an outlet port of the catalyst N-N9, Fig. 5A shows case the air-fuel ratio is changed over from the lean condition having A/F = 22 to the rich condition having A/F = 14.2.

Herein, under A/F = 14.2, to the fuel of F (g), it shows a condition of a shortage of the air (the gaseous oxidizing agent) of 0.5 F (g), namely the reduction atmosphere.

In the start time of the regeneration at the immediately after time of the rich change-over, since the exhaust gas NOx concentration in the exhaust gas of A/F = 14.2 is high, the inlet port NOx concentration in the rich operation increases largely and in company with this the outlet NOx concentration increases transient. However, the outlet port NOx concentration lowers largely always the inlet port NOx concentration. The regeneration proceeds rapidly and the outlet port NOx concentration reaches to a vicinity of zero (0) with a short time.

Fig. 5B shows case where the air-fuel ratio is changed over from the lean condition having A/F = 22 to the rich condition having A/F = 14.2. Similarly to Fig. 5A, the outlet port NOx concentration lowers largely always to the inlet port NOx concentration and further the outlet port NOx concentration reaches to a vicinity of zero (0) with a shorter time.

As clearly understood from the above, an A/F value as the regeneration condition gives an influence to the time for requiring the regeneration. A/F value, the time and gaseous reducing agent amount suitable for the regeneration are influenced by the composition, such as the shape, the temperature and SV value of the catalyst, the kind of the gaseous reducing agent, and the shape and the length of the exhaust gas flow passage. Accordingly, the regeneration condition is determined overall under the consideration of the above stated these items.

Fig. 6A and 6B show NOx concentrations of an inlet port and an outlet port of the catalyst N-K9. Fig. 6A shows case the air-fuel ratio is changed over from the lean condition having A/F = 22 to the rich condition having A/F = 14.2, and Fig. 6B shows case the air-fuel ratio is changed over from the lean condition having A/F = 22 to the rich condition having A/F = 14.2.

Similarly to case of the above catalyst N-N9, the outlet port NOx concentration lowers largely always the inlet port NOx concentration and further the regeneration of the catalyst proceeds with a short time.

(Basic Characteristics of Catalyst)

Using a model gas, the basic characteristics, in particular an affect for giving NOx purification rate by the oxygen concentration, were evaluated.

The cordierite honeycomb of the catalyst N-N9 having 6 ml was filled up in a silica reaction tube having an inner diameter of 28 mm and the model gas was passed through the tube. The oxygen concentration in the model gas was varied and an affect for giving to NOx purification rate by the oxygen concentration was studied. The reaction temperature was 300°C at the inlet port gas temperature of the catalyst.

At first, the gas composition comprises of $O_2$ of 5 % (a volume ratio: same hereinafter), NO of 600 ppm, $C_3H_6$ of 500 ppm (1,500 ppm as $C_1$), CO of 1,000 ppm, $CO_2$ of 10 %, $H_2O$ of 10 %, and the balance of $N_2$ was passed through. After ten (10) minutes where NOx purification rate has been stable, only the oxygen concentration was lowered to a predetermined value and maintained for twenty (20) minutes, finally the gas composition was returned again at the initial time gas composition. NOx concentration change for the above time interval was varied with six kinds of $O_2$ concentration, which were 0 %, 0.5 %, 0.7 %, 1 %, 2 % and 3 %, and the graphs shown in Fig. 19 was obtained.

In Fig. 19, in case where the oxygen concentration in the lean gas was lowered, namely in case where the oxidization atmosphere became weak and the reduction atmosphere became strong, it was admitted that there had a tendency that NOx purification rate was heightened. And this suggests that this catalyst purifies NOx according to the reduction.

Further, in Fig. 19, NOx purification rate was a positive value at all times and in accordance with this catalyst NOx concentration passed through the catalyst did not increase in regardless of the oxygen concentration.

Next, the gas composition comprises of $O_2$ of 5 %, NO of 600 ppm, and the balance of $N_2$ was passed through and the oxygen concentration in this gas was similarly varied and Fig. 20 was obtained. In this examination, it was a feature where the gaseous reducing agent was not included in the gas. In Fig. 20, by lowering the oxygen concentration and even the oxidization atmosphere was weakened, then NOx purification rate did not improve. This suggests that this catalyst purifies NOx according to the reduction.

In Fig. 20, NOx purification rate had not a positive value, and further in this catalyst according to the oxidization atmosphere once caught NOx is not discharged or not emitted.

<u>An Exhaust Gas Purification Apparatus</u>

Fig. 1 is a whole construction of an apparatus showing one embodiment of an exhaust gas purification apparatus according to the present invention.

An exhaust gas purification apparatus according to the present invention comprises an air intake system having an engine 99 for enable to carry out the lean burn operation, an air flow sensor 2, a throttle valve 3 etc., an exhaust system having an oxygen concentration sensor 19 (or A/F sensor), an exhaust gas temperature sensor 17 and a catalyst 18 etc., and an engine control unit (ECU) etc..

ECU comprises I/O LSI as an input/output interface, an execution processing unit MPU, memory apparatuses RAM and ROM for storing many control programming, and a timer counter, etc..

The above stated exhaust gas purification apparatus functions as following. After the inhale air to the engine 99 is filtered through an air cleaner 1, the inhale air is metered according to the air flow sensor 2. Further, the air passes through the throttle valve 3 and is received the fuel injection through an injector 5 and after is supplied to the engine 99 as an air-fuel mixture. The signals of the air flow sensor 2 and the other signals are inputted into ECU (engine control unit).

In ECU, by latter stated method the operation conditions of the internal combustion engine and the conditions of the catalyst are evaluated and an air-fuel ratio is determined. By controlling the injection period etc. of the injector 5, the fuel concentration of the air-fuel mixture is established at a predetermined value.

The air-fuel mixture sucked in the cylinders is ignited and burned through an ignition plug 6 which is controlled according to the signals from ECU. The combustion exhaust gas is led to an exhaust gas purification system. A catalyst 18 is provided in the exhaust gas purification system, during the stoichiometric operation NOx, HC and CO are purified according to the three component catalyst function and during the lean operation time NOx is purified according to NOx adsorbing ability and at the same time HC and CO are purified according to the combusting function.

Further, in accordance with the judgment and the control signal of ECU, at the lean operation time NOx purification ability of a catalyst 18 is judged always and in case where NOx purification ability lowers the air-fuel ratio etc. is shifted to the rich side and then NOx purifying ability is recovered. With the above stated operations, in this apparatus, the exhaust gas under all engine combustion conditions including the lean operation and the stoichiometric operation (including rich operation) is purified effectively.

The fuel concentration (hereinafter, the air-fuel ratio) of the air-fuel mixture supplied to the engine is controlled as followings. Fig. 7 is a block diagram view showing the air-fuel ratio control method.

From a load sensor output for outputting a signal in response to a step-in amount of an acceleration pedal, an output signal of the intake air amount metered by the air flow sensor 2, an engine rotation number signal detected by a crank angle sensor, a throttle sensor signal for detecting the throttle valve opening degree, an engine water coolant temperature signal, a startor signal etc., ECU 25 determines the air-fuel ratio (A/F) and this signal is compensated according to a signal which is feed-backed from the oxygen sensor.

In cases of a low temperature time, an idling time and a high load time etc., the above feed-back control is stopped according to the signal of the respective sensor and the respective switching means. Further, since the apparatus has an air-fuel ratio compensation leaning function. With this air-fuel ratio compensation leaning function the apparatus can correspond accurately the delicate change and the abrupt change of the air-fuel ratio.

In case where the determined air-fuel ratio is the stoichiometric condition (A/F = 14.7) and the rich condition (A/F < 14.7), by the indication of ECU the injection conditions for the injector 5 are determined and thereby the stoichiometric operation and the rich operation are carried out.

On the other hand, in case of where the lean operation (A/F > 14.7) is determined, the judgment of the existence of NOx adsorbing ability of the catalyst 18 is carried out. And it is judged when the apparatus has the existence of the adsorbing ability, the fuel injection amount for carrying out the lean operation being followed to the indication is determined. Besides, it is judged when the apparatus has no adsorbing ability, the air-fuel ratio is shifted to the rich side with a predetermined period and then the catalyst 18 is regenerated.

Fig. 8 shows a flow chart of the air-fuel ratio control. In a step 1002, signals for indicating various operation conditions or for detecting the operation conditions are read in. According to these signals, in a step 1003, the air-fuel ratio is determined, and in a step 1004 the determined air-fuel ration is detected. In a step 1005, the size between the determined air-fuel ratio and the stoichiometric air-fuel ratio is compared.

Herein, the stoichiometric air-fuel ratio to be the comparison subjective, to put it more precisely, is the air-fuel ratio in which the velocity of the catalytic reduction reaction of NOx in the catalyst exceeds over the NOx pick-up velocity in accordance with the adsorption. This stoichiometric air-fuel ratio is determined by evaluating the characteristics of the catalyst in advance and the air-fuel ratio of the vicinity of the stoichiometric air-fuel ratio is selected.

Herein, in case where the established air-fuel ratio is equal to or less than the stoichiometric air-fuel ratio, it proceeds to a step 1006, and without regeneration operation of the catalyst the air-fuel ratio operation followed by the indication is carried out.

In case where the established air-fuel ratio is more than the stoichiometric air-fuel ratio, it proceeds to a step 1007. In the step 1007, the assumption execution of NOx adsorption amount is carried out. In successively, in a step 1008, the assumed NOx adsorption amount is judged whether it is less than a predetermined limitation amount or not.

The limitation adsorption amount is set to a value where NOx in the exhaust gas is enable to be fully purified by evaluating NOx pick-up characteristics in the catalyst according to the beforehand experimentation carried out considering the exhaust gas temperature and the catalyst temperature etc..

In case where the apparatus has NOx adsorbing ability, it proceeds to a step 1006, without the regeneration operation of the catalyst the air-fuel ratio operation followed by the indication is carried out. In case where the apparatus has no NOx adsorbing ability, it proceeds to a step 1009, and the air-fuel ratio is shifted to the rich side. In step 1010, the rich shift time is counted and in case where the lapse time Tr exceeds over a predetermined time $(Tr)_c$, the rich shift finishes.

The judgment of NOx adsorbing ability will be carried out as following.

Fig. 9 shows a method for judging and accumulating NOx discharging amount according to the various kinds operation conditions during the lean operation time.

In a step 1007-E01, the signals relating to the working conditions of the catalyst such as the exhaust gas temperature and signals relating to various kinds engine operation conditions which affect to NOx concentration in the exhaust gas are read in and NOx amount $E_N$ to be absorbed in a unit time is assumed.

In a step 1007-E02, NOx amount $E_N$ is accumulated, and in a step 1008-E01 the size between the accumu-

lation value $\sum E_N$ and the upper limitation value $(E_N)_c$ is compared.

In case where the accumulation value $\Sigma E_N$ is equal to or is less than the upper limitation value $(E_N)_c$ the accumulation is continued, but in case where the accumulation value $\Sigma E_N$ is more than the upper limitation value $(E_N)_c$ in a step 1008-E02 the accumulation is released and it proceeds to a step 1009.

Fig. 10 shows a method for judging NOx adsorbing ability according to the accumulation time of the lean operation time.

In a step 1007-H01, the lean operation time $H_L$ is accumulated, and in a step 1008-H01 the size between the accumulation value $\sum H_L$ and the upper limitation value $(H_L)_c$ of the accumulation time is compared.

In case where the accumulation value $\sum H_L$ is equal to or is less than the upper limitation value $(H_L)_c$ the accumulation is continued, but in case where the accumulation value $\sum H_L$ is more than the upper limitation value $(H_L)_c$ in a step 1.008-H02 the accumulation is released and it proceeds to a step 1009.

Fig. 11 shows a method for judging NOx adsorbing ability according to the oxygen sensor signal during the lean operation time.

In a step 1007-001, the oxygen amount $Q_o$ is accumulated, and in a step 1008-001 the size between the accumulation value $\sum Q_o$ and the upper limitation value $(Q_o)_c$ of the oxygen amount is compared.

In case where the accumulation value $\sum Q_o$ is equal to or is less than the upper limitation value $(Q_o)_c$ the accumulation is continued, but in case where the accumulation value $\sum Q_o$ is more than the upper limitation value $(Q_o)_c$ in a step 1008-002 the accumulation is released and it proceeds to a step 1009.

Fig. 12 shows a method for judging NOx adsorbing ability according to NOx concentration sensor signal which is detected in the inlet port of the catalyst during the lean operation time.

In a step 1007-N01, NOx amount $Q_N$ in the inlet port of the catalyst is accumulated according to NOx concentration sensor signal. In a step 1008-NO1 the size between the accumulation value $\Sigma Q_N$ and the upper limitation value $(Q_N)_c$ of the accumulation NOx amount is compared.

In case where the accumulation value $\Sigma Q_N$ is equal to or is less than the upper limitation value $(Q_N)_c$ the accumulation is continued, but in case where the accumulation value $\Sigma Q_N$ is more than the upper limitation value $(Q_N)_c$ in a step 1008-002 the accumulation is released and it proceeds to a step 1009.

Fig. 13 shows a method for judging NOx adsorbing ability according to NOx concentration sensor signal which is detected in the outlet port of the catalyst during the lean operation time.

In a step 1007-C01, NOx amount $C_N$ in the outlet port of the catalyst is accumulated according to NOx concentration sensor signal. In a step 1008-C01 the size between the accumulation value $\sum C_N$ and the upper limitation value $(C_N)_c$ of the accumulation NOx amount is compared.

In case where the accumulation value E $C_N$ is equal to or is less than the upper limitation value $(C_N)_c$ the accumulation is continued, but in case where the accumulation value $\Sigma C_N$ is more than the upper limitation value $(C_N)_c$, it proceeds to a step 1009.

Fig. 14 shows another embodiment of an exhaust gas purification apparatus according to the present invention.

The structural difference between the embodiment shown in Fig. 1 and this embodiments is a provision of manifold catalyst 17 which is arranged on the exhaust air duct at a vicinity of the engine 99.

The reinforcement for the discharging regulation of the exhaust gas in the automobile is necessary to purify the harmful materials such as HC which is discharged immediately after the engine starting time. Namely, in the prior technique the harmful materials are discharged with non-treatment until the catalyst reaches to the working temperature, but it is necessary to reduce remarkably the non-treated amount of the harmful materials.

To reduce widely the non-treated amount of the harmful materials, a method for abruptly arising the catalyst to the working temperature is effective.

Fig. 14 shows the apparatus construction which is enable to diminish HC and CO discharging amount during the engine starting time and also the exhaust gas purification in the lean operation time and the stoichiometric operation time (including the rich operation time).

In the construction shown in Fig. 14, as the manifold catalyst 17, it can apply the three component catalyst comprised mainly of Pt, Rh, and $CeO_2$, the material in which Pd is added to the three component catalyst, and the combustion catalyst which is comprised of the combustion active components such as Pd as a main component.

In this construction shown in Fig. 14, during the engine starting time the temperature of the manifold catalyst 17 arises in a short time and the purification of HC and CO is carried out immediately after the engine starting.

During the stoichiometric operation time both the manifold catalyst 17 and the catalyst 18 fulfill the function and then the purification for HC, CO and NOx is carried out and during the lean operation time the catalyst 18 adsorption-purifies NOx.

In case of the regeneration of the catalyst 18, the air-fuel ratio is shifted to the rich side, HC and CO as the gaseous reducing agent do not receive the large chemical change by the manifold catalyst 17 and can reach to the catalyst 18 and regenerates the catalyst 18. The above stated construction can obtain by the provision of the catalyst 18 and this is a remarkable feature obtained by the provision of the catalyst 18.

Fig. 15 shows a further embodiment of an exhaust gas purification apparatus according to the present invention. The difference between the construction shown in Fig. 1 and the construction shown in Fig. 15 resides in that the engine 99 is a direct fuel injection system. The apparatus according to the present invention, it can suitably apply to the direct fuel injection system engine.

Fig. 16 shows a further embodiment of an exhaust gas purification apparatus according to the present invention. The difference between the constructions shown in Fig. 1 and Fig. 15 and the construction shown in Fig. 16 resides in that a post-catalyst 24 is provided at the downstream of the catalyst 18.

For example, by arranging the combustion catalyst on the post-catalyst 24 it can realize the apparatus in which HC purification ability can be improved. Further, by arranging the tree way catalyst on the post-catalyst 24 it can realize the apparatus in which the tree way function during the stoichiometric operation time can be reinforced.

Fig. 17 shows a further embodiment of an exhaust gas purification apparatus according to the present invention. The difference between the constructions shown in Fig. 1 and Figs. 14-16 and the construction shown in Fig. 17 resides in that by the indication of the rich-shift the fuel is added to the upstream of the catalyst 18 through a gaseous reducing agent injector 23. In this system, the operation conditions of the engine can be established in regardless of the conditions of the catalyst 18.

Hereinafter, the effects obtained by the present invention will be explained by illustrating embodied examples.

The inventor's of the present invention were evaluated with respect to the exhaust gas purification performances of the catalyst and of the exhaust gas purification apparatus according to the present invention.

The catalyst and the comparison catalyst were mounted on the lean burn specification automobile having the displacement volume of 1.8 litters and the automobile was run on a chassis dynamometer.

Both the test catalysts were the honeycomb shape ones having 400 cell/in$^2$ and the volume of 1.7 litters and were heat-treated at 700 °C under the oxidization atmosphere and they were putted below the floor.

The running was constant speed running and 10-15 modes running based on Japanese exhaust gas regulation measurement method. The analysis of the exhaust gas was applied two methods, one of which was a method for measuring NOx, HC, and CO concentrations in the exhaust gas with the direct analysis using the automobile exhaust gas measurement apparatus, and another of which was a method for measuring CVS (constant volume sampling) value using the automobile constant volume dilution sampling apparatus.

Further, in 10-15 mode running, the running was the lean (A/F = 22-23) running during the constant speed running time, was the acceleration time from 20 km/h to 40 km/h at 10 mode and the acceleration time from 50 km/h to 70 km/h at 15 mode, and the rest of the running was the stoichiometric running.

Fig. 18 shows NOx concentration of the inlet port and the outlet port of the catalyst at the last 10 mode among of 10 modes being repeated three times and 15 mode succeeded to the last 10 mode in case of the mounting of the catalyst N-N9 according to the present invention, in case of the mounting of the catalyst N-K9 according to the present invention, and case of the mounting of the catalyst N-R2 according to the comparison example. The comparison catalyst had the composition shown in a latter Table 2.

In Fig. 18, in case the mounting of the catalysts N-N9 and N-K9, the outlet port NOx concentration lowered the inlet port NOx concentration at all operation areas, and since the lean operation and the stoichiometric operation were carried out repeatedly, the catalyst was regenerated effectively and NOx purification ability was held and continued. On the other hand, in the comparison catalyst N-R2, there is a portion where the outlet port NOx concentration exceeded over the inlet port NOx concentration.

CVS value obtained by the various kinds of the catalyst and the comparison catalyst in company with the catalyst compositions are shown in Table 2 and Table 3. The preparations for the catalyst and the comparison catalyst were performed by the above stated methods. However, as the preparation raw materials, barium nitrate was used as barium (Ba) and silica-sol was used as silicon (Si). It is assumed that Si exists silica ($SiO_2$) or the complex oxide thereof.

Table 2

| | marks | composition | CVS value (g/km) | | |
|---|---|---|---|---|---|
| | | | NOx | HC | CO |
| comparison catalyst | N-R1 | (0.2Rh, 2.7Pt) - 27Ce/$Al_2O_3$ | 0.15 | 0.02 | 0.07 |
| | N-R2 | 2Mg - (0.2Rh, 2.7Pt) - 27Ce/$Al_2O_3$ | 0.15 | 0.02 | 0.04 |
| adsorption catalyst | N-S1 | 2Mg - (0.2Rh, 2.7Pt) - 30Sr - 27Ce/$Al_2O_3$ | 0.08 | 0.10 | 0.08 |
| | N-S2 | 2Mg - (0.2Rh, 2.7Pt) - (30Sr, 2Mg) - 27Ce/$Al_2O_3$ | 0.09 | 0.05 | 0.08 |

Table 2 (continued)

| | marks | composition | CVS value (g/km) | | |
|---|---|---|---|---|---|
| | | | NOx | HC | CO |
| | N-S3 | (0.2Rh, 2.7Pt) -(30Sr, 4Ti) - 27Ce/$Al_2O_3$ | 0.11 | 0.08 | 0.11 |
| | N-S4 | 2Mg - (0.2Rh, 2.7Pt) - (30Sr, 4Ti) - 27Ce/$Al_2O_3$ | 0.10 | 0.07 | 0.09 |
| | N-S5 | 2Mg - (0.2Rh, 2.7Pt) - (30Sr, 4Si) - 27Ce/$Al_2O_3$ | 0.10 | 0.08 | 0.09 |
| | N-N1 | 2Mg - (0.2Rh, 2.7Pt) - 18Na - 27Ce/$Al_2O_3$ | 0.06 | 0.08 | 0.03 |
| | N-N2 | 2Mg - (0.2Rh, 2.7Pt) - (18Na, 2Mg) - 27Ce/$Al_2O_3$ | 0.06 | 0.12 | 0.04 |
| | N-N3 | (0.2Rh, 2.7Pt) - (18Na, 4Ti) - 27Ce/$Al_2O_3$ | 0.07 | 0.16 | 0.10 |
| | N-N4 | 2Mg - (0.2Rh, 2.7Pt) - (18Na, 4Ti) - 27Ce/$Al_2O_3$ | 0.06 | 0.15 | 0.08 |
| | N-N5 | (0.2Rh, 2.7Pt) - (18Na, 4Si) - 27Ce/$Al_2O_3$ | 0.05 | 0.10 | 0.12 |
| | N-N6 | 2Mg - (0.2Rh, 2.7Pt) - (18Na, 4Si) - 27Ce/$Al_2O_3$ | 0.06 | 0.08 | 0.06 |
| | N-N7 | 2Mg - (0.2Rh, 2.7Pt) - (10Na, 10Sr) - 27Ce/$Al_2O_3$ | 0.05 | 0.10 | 0.05 |
| | N-N8 | (0.2Rh, 2.7Pt) - (18Na, 4Ti, 2Mg) - 27Ce/$Al_2O_3$ | 0.07 | 0.12 | 0.07 |
| | N-N9 | 2Mg - (0.2Rh, 2.7Pt) - (18Na, 4Ti, 2Mg) - | 0.04 | 0.11 | 0.04 |
| | N-N10 | 2Mg - (0.2Rh, 2.7Pt) - (10Na, 4Ti, 2Mg) - 27Ce/$Al_2O_3$ | 0.04 | 0.06 | 0.04 |

Table 3

| | marks | composition | CVS value (g/km) | | |
|---|---|---|---|---|---|
| | | | NOx | HC | CO |
| adsorption catalyst | N-K1 | 2Mg - (0.2Rh, 2.7Pt) - 18K - 27Ce/$Al_2O_3$ | 0.06 | 0.08 | 0.03 |
| | N-K2 | 2Mg - (0.2Rh, 2.7Pt) -(18K, 2Mg) - 27Ce/$Al_2O_3$ | 0.05 | 0.10 | 0.05 |
| | N-K3 | (0.2Rh, 2.7Pt) -(18K, 4Si) * 27Ce/$Al_2O_3$ | 0.08 | 0.1 | 0.016 |
| | N-K4 | 2Mg - (0.2Rh, 2.7Pt) - (18K, 4Ti) - 27Ce/$Al_2O_3$ | 0.05 | 0.0 | 0.085 |
| | N-K5 | 2Mg - (0.2Rh, 2.7Pt) - (18K, 4Si) - 27Ce/$Al_2O_3$ | 0.06 | 0.0 | 0.085 |
| | N-K6 | (0.2Rh, 2.7Pt) - (18K, 10Sr) - 27Ce/$Al_2O_3$ | 0.07 | 0.12 | 0.08 |
| | N-K7 | 2Mg - (0.2Rh, 2.7Pt) - (18K, 4Ti, 2Mg) - 27Ce/$Al_2O_3$ | 0.05 | 0.10 | 0.05 |
| | N-K8 | (0.2Rh, 2.7Pt) - (18K, 4Ti, 2Mg) - 27Ce/$Al_2O_3$ | 0.05 | 0.10 | 0.07 |
| | N-K9 | 2Mg - (0.2Rh, 2.7Pt) - (18Na, 4Ti, 2Mg) - 27Ce/$Al_2O_3$ | 0.05 | 0.07 | 0.04 |
| | N-K10 | 2Mg - (0.2Rh, 2.7Pt)- (10K, 10Sr, 2Mg) - 27Ce/$Al_2O_3$ | 0.04 | 0.07 | 0.08 |
| | N-M1 | 2Mg - (0.2Rh, 2.7Pt) - (10Na, 10K, 4Ti) - 27Ce/$Al_2O_3$ | 0.05 | 0.05 | 0.08 |
| | N-M2 | 2Mg - (0.2Rh, 2.7Pt) - (10Na, 10K, 10Si) - 27Ce/$Al_2O_3$ | 0.06 | 0.05 | 0.08 |
| | N-M3 | 2Mg - (0.2Rh, 2.7Pt) - (10Na, 10K, 10Sr) - 27Ce/$Al_2O_3$ | 0.06 | 0.10 | 0.05 |
| | N-M4 | 2Mg - (0.2Rh, 2.7Pt) - (10Na, 10K, 4Ti, 2Mg) - 27Ce/$Al_2O_3$ | 0.05 | 0.11 | 0.05 |

As to the various kinds of the catalyst, the exhaust gas purification performances thoseof were measured using the model exhaust gas.

Modified Catalysts

Experimentation 1:

(Preparation Method)

The alumina powders and alumina nitrate slurry as a precursor thereof were coated on the cordierite honeycomb (400 cell/in$^2$), and the alumina coating honeycomb was obtained, such an alumina coating honeycomb was coated the alumina of 150 g per the apparent volume of the honeycomb having 1 (one) litter. Cerium nitrate solution is impregnated to the obtained alumina coating honeycomb and after the honeycomb was dried at 200 °C, the honeycomb was calcined for 1 (one) hour at 600 °C.
In succession, to the honeycomb a mixture liquid comprised of sodium nitrate ($NaNO_3$) solution and magnesium nitrate ($MgNO_3$) solution was impregnated and in similarly the above the honeycomb was dried and calcined.
Further, the honeycomb was impregnated in a mixture solution comprised of dinitrodiamime platinum nitrate solution and rhodium nitrate ($Rh(NO_3)_2$) solution, after the honeycomb was dried at 200 °C the honeycomb was calcined for 1 (one) hour at 450 °C. In finally, magnesium nitrate ($Mg(NO_3)_2$) solution was impregnated, after the honeycomb was dried at 200 °C the honeycomb was calcined for 1 (one) hour at 450 °C.
With the above stated method, Embodiment Catalyst 1 was obtained, in this catalyst to 100 wt% Al, 18 wt% Ce, 12 wt% Na, and 1.2 wt% Mg were held at the same time and further this Embodiment Catalyst 1 contained 1.6 wt% Pt, 0.15 wt% Rh, and 1.5 wt% Mg.
Using the similar method, Embodiment Catalysts 2-4 were obtained.
As clearly shown in above, NOx adsorption catalyst is provided in the exhaust gas flow passage and under the oxidization atmosphere of the lean gas exhaust gas NOx is caught according to the chemical adsorption and thereby the reduction atmosphere is formed and the adsorption catalyst is regenerated. Accordingly, NOx etc. in the lean burn exhaust gas can be purified with the high efficiency without the big affect on the fuel consumption.
The compositions of the prepared catalysts are shown in Table 4 in a lamp. The support order in this Table 4 indicates that after a first component has been held, a second component and then the third and the fourth were held. Further, the supported amount is indicated at before of the support metal symbol.

Table 4

| | support order | | | |
|---|---|---|---|---|
| | first component | second component | third component | fourth component |
| Embodiment Catalyst 1 | 18 wt% Ce | 12 wt% Na<br>1.2 wt% Mg | 0.15 wt% Rh<br>1.6 wt% Pt | 1.5 wt% Mg |
| Embodiment Catalyst 2 | 18 wt% Ce | 12 wt% Na<br>1.2 wt% Mg<br>7 wt% Sr | 0.15 wt% Rh<br>1.6 wt% Pt | |
| Embodiment Catalyst 3 | 18 wt% La | 12 wt% Na<br>1.2 wt% Mg | 0.15 wt% Rh<br>1.6 wt% Pt | |
| Embodiment Catalyst 4 | 18 wt% Ce | 1.5 wt% Na<br>1.5 wt% Mg | 1.5 wt% Pd<br>1.5 wt% Pt | |

(Experimentation Manner)

(1) The honeycomb shape catalyst of 6 cc (17 mm square; 21 mm length) was filled up in a Pyrex made reaction tube.
(2) The reaction tube was putted into a ring shapes electric furnace and raised to the temperature of 300 °C. As the reaction temperature, the honeycomb inlet port gas temperature was measured. After the temperature reaches to 300 °C and at the time when the temperature was stable, the flow of the model exhaust gas of the stoichiometric combustion (it is called as a stoichiometric model exhaust gas) was started. After the flow of 3 (three) minutes, the flow of the stoichiometric model gas can stopped and the flow of the model exhaust gas of the lean burn (it is called as a lean model exhaust gas) started.

NOx in the gas discharging from the reaction tube was measured according to the chemical luminescence detection method and HC was measured according to FID method.

NOx purification performance and HC purification performance obtained by this method were made as an initial period performance.

(3) The reaction tube where the honeycomb catalyst used in the above (2) was filled up was putted into the ring shape electric furnace and raised to the temperature of 300 °C. As the reaction temperature, the honeycomb inlet port gas temperature was measured.

After the temperature reached to 300 °C and became stable, the flow of the model exhaust gas of the stoichiometric combustion which contain $SO_2$ gas is as a catalyst poisoning was started. The $SO_2$ poisoning operation was finished by flowing the poisoning gas $SO_2$ gas 5 for (five) hours.

After the above stated $SO_2$ poisoning sing the honeycomb catalyst, the test similar to the above (2) was carried out and NOx purification performance and HC purification performance of after $SO_2$ poisoning were obtained.

(4) The honeycomb catalyst used in the above (2) was putted into the baking furnace and under the air atmosphere the honeycomb catalyst was calcined at 300 °C for 5 (five) hours. After the cooling of the honeycomb catalyst, NOx purification performance and HC purification performance similar to the above (2) were measured.

As the stoichiometric model exhaust gas, the gas comprised of 0.1vol% NO, 0.05vol% $C_3H_6$, 0.6vol% CO, 0.6vol% $O_2$, 0.2vol% $H_2$, 10vol% water vapor and the balance of $N_2$ were used.

Further, as the lean model exhaust gas, the gas comprised of 0.06vol% NO, 0.04vol% $C_3H_6$, 0.1vol% CO, 10vol% $CO_2$, 5vol% $O_2$, 10vol% water vapor and the balance of $N_2$ were used.

In the above stoichiometric model exhaust gas, $C_3H_6$, CO, $H_2$ are the gaseous reducing agents and $O_2$ and NO are the gaseous oxidizing agents. The gaseous oxidizing agent amount is 0.65 % for converting into $O_2$ and the gaseous reducing agent amount is 0.575 % for converting into $O_2$ consumption ability. Accordingly, both were balanced.

In the lean mode exhaust gas, $C_3H_6$ and CO are the gaseous reducing agents and $O_2$ and NO are the gaseous oxidizing agents. The gaseous oxidizing agent amount is 5.03 % % for converting into $O_2$ and the gaseous reducing agent amount is of 0.23 % for converting into $O_2$ consumption ability. Accordingly, there is an excess amount of oxygen ($O_2$) of 4.8 %.

As the gas served to the catalyst poisoning, the gas comprised of 0.1vol% NO, 0.05vol% $C_3H_6$, 0.6vol% CO, 0.005vol% $SO_2$, 10vol% water vapor and the balance of $N_2$ were used.

The space velocities of the above three kinds gases were 30,000 /h in the dry gas base (not containing the water vapor).

Table 5 shows the purification rate of the honeycomb catalyst of the initial period and after the poisoning by $SO_2$. Here, NOx purification rate was obtained after 1 (one) minute where the stoichiometric model gas was changed over to the lean model exhaust gas.

Table 5

| | initial NOx purification rate (%) | | NOx purification rate (%) after poisoning by $SO_2$ | | NOx purification rate (%) after 800 °C calcination | |
|---|---|---|---|---|---|---|
| | 300 °C | 400 °C | 300 °C | 400 °C | 300 °C | 400 °C |
| Embodiment Catalyst 1 | 91 | 94 | 76 | 67 | 58 | 49 |
| Embodiment Catalyst 2 | 98 | 97 | 85 | 70 | 67 | 62 |
| Embodiment Catalyst 3 | 91 | 94 | 75 | 65 | 55 | 45 |
| Embodiment Catalyst 4 | 90 | 90 | 70 | 60 | 55 | 45 |

NOx purification rate and HC purification rate were calculated according to following formula.

NOx purification rate = (NOx concentration in inlet port gas - NOx concentration in outlet port gas) x 100 / (NOx concentration in inlet

port gas) (1)

HC purification rate = (HC concentration in inlet port gas - HC concentration in outlet port gas) x 100 / (HC concentration in inlet port gas) (2)

Embodiment Catalysts 1-4 had a high initial period performance and a heat resistant ability and a SOx endurance ability.

Embodiment Catalyst 5 was obtained by replacing the support material of Embodiment Catalyst 1 with La and Al complex oxide material (La- β -$Al_2O_3$) where the construction ratio La-Al comprised of 1-20 mol% La and 100 mol% sum of La and Al. The performances of Embodiment Catalyst 5 are shown in Table 6.

Table 6

| | initial NOx purification rate (%) | | Nox purification rate (%) after poisoning by $SO_2$ | | NOx purification rate (%) after calcination at 800 °C | |
|---|---|---|---|---|---|---|
| | 300 °C | 400 °C | 300 °C | 400 °C | 300 °C | 400°C |
| Embodiment Catalyst 5 | 90 | 88 | 75 | 65 | 67 | 65 |

As the support was constituted by La-Al complex oxide material (La-β-$Al_2O_3$), the heat resistant ability can be improved.

In Embodiment Catalyst 1, the initial period performance of NOx purification rate at 400 °C, in which the support amount of Na of the second component was varied, was measured. The catalyst preparation manner was similar to Embodiment Catalyst 1 and the experimentation manner was similar to the Experimentation 1. The results are shown in Fig. 21. To obtain the high NOx purification rate, it was suitable to make Na supported amount which was 5-20 wt% to the support of 100 wt%.

In Embodiment Catalyst 1, the initial period performance of NOx purification rate at 400 °C, in which the supported amount at Mg of the second component was varied was measured. The results are shown in Fig. 22. To obtain the high NOx purification rate, it was suitable to make the weight ratio between Mg supported amount and (Na supported amount + Mg support amount) at 1-40 wt%.

In Embodiment Catalyst 1, the initial period performance of NOx purification rate at 400 °C, in which the supported amount of Ce of the first component was varied, was measured. The results are shown in Fig. 23. To obtain the high NOx purification rate, it was suitable to make Ce supported amount at 5-30 wt%.

In Embodiment Catalyst 1, the initial period performance of NOx purification rate at 400 °C, in which the supported amounts of Pt and Rh were varied, was measured. The results are shown in Fig. 24. To obtain the high NOx purification rate, it was suitable to make the supported amount of Pt at 0.5-3 wt% and the supported amount of Rh at 0.05-0.3 wt%.

In Embodiment Catalyst 1, the initial period performance of NOx purification rate at 400 °C, in which the supported amounts of Pt and Pd were varied, was measured. The results are shown in Fig. 25. To obtain the high NOx purification rate, it was suitable to make the supported amount of Pt at 0.5-3 wt% and the supported amount of Pd at 0.5-15 wt%.

In Embodiment Catalyst 2, NOx purification rate at 400 °C of the initial period and after the calcination at 800 °C, was measured. The results are shown in Fig. 26. Since the supported amount of Sr was 1-20 wt%, the high NOx purification rate and the high heat resistant ability were obtained.

Experimentation 2:

(Preparation Method)

Water and dilute nitric acid are added to boehmite powers and slurry for coating was obtained. The obtained slurry was wash-coated to a cordierite made honeycomb and after drying the honeycomb was calcined for 1 (one) hour at 600 °C, thereby an alumina coating honeycomb was obtained. Coated amount of alumina was 150 g per the honeycomb 1 litter.

The above alumina coated honeycomb was immersed in Ce nitrate solution and after drying the honeycomb was calcined for 1 (one) hour at 600 °C. In succession, the honeycomb was immersed in Sr nitrate solution and after drying the honeycomb was calcined for 1 (one) hour at 600 °C. Further, the honeycomb was immersed in titania-sol solution as a precursor for titania and after drying the honeycomb was calcined for 1 (one) hour at 600 °C.

Next, the honeycomb was immersed in a solution containing dinitrodiamime Pt nitrate and Rh nitrate and after drying the honeycomb was calcined for 1 (one) hour at 450 °C. Finally, the honeycomb was immersed in Mg nitrate solution and after drying the honeycomb was calcined for 2 (two) hours at 450 °C, then honeycomb A was obtained.

The catalyst composition of the honeycomb catalyst A was comprised of to alumina ($Al_2O_3$) of 100 wt%, Mg of 1 wt%, Rh of 0.15 wt%, Pt of 1.9 wt%, Ti of 5 wt%, Sr of 15 wt%, and Ce of 18 wt% and this is the standard for other Embodiment Catalysts.

Further, as the method for manufacturing the honeycomb catalyst, in addition to the above method of impregnating the catalyst components to the alumina coated honeycomb, it is possible to employ a method where the catalyst components are immersed into the aluminum powders and after the catalyst powders are prepared they are made to the slurry, the slurry are coated to the honeycomb substrate (honeycomb base body). Further, as the precursor of titania, in addition to the above titania-sol, it can employ an organo titanium compound, the titanium sulfate and the titanium chloride etc. As the alkali earth metals in place of Sr nitrate ($Sr(NO_3)_2$) using Ca nitrate ($Ca(NO_3)_2$) , a honeycomb catalyst B was obtained.

Except for as the rare earth metals in place of cerium nitrate ($Ce(NO_3)_2$) using lanthanum nitrate ($La(NO_3)_2$), using the similar method shown in the honeycomb catalyst A, a honeycomb catalyst C was obtained. Further, using iridium nitrate, a honeycomb catalyst D was obtained.

According to the variations of the concentration of the titania-sol used in the preparation of the honeycomb catalyst A, three kinds honeycomb catalysts E, F and G having different Ti supported amount were obtained.

According to the variations of the concentration of strontium nitrate ($Sr(NO_3)_2$) used in the preparation of the honeycomb catalyst A, three kinds honeycomb catalysts H, I and J having different Sr supported amount were obtained.

According to the variations of the concentration of dinitrodiamime Pt solution used in the preparation of the honeycomb catalyst A, three kinds honeycomb catalysts K, L and M having different Pt supported amount were obtained.

According to the variations of the concentration of rhodium nitrate solution used in the preparation o.f the honeycomb catalyst A, three kinds honeycomb catalysts N, O and P having different Rh supported amount were obtained.

According to the variations of the concentration of cerium nitrate solution used in the preparation of the honeycomb catalyst A, three kinds honeycomb catalysts Q, R and S having different Ce supported amount were obtained.

A honeycomb catalyst T was obtained, this honeycomb T do not contain titanium (Ti) in the honeycomb catalyst A.

The catalyst compositions of the honeycomb catalysts A-T are shown in Table 7 in a lump.

Table 7

| | catalyst composition (wt%) | | | | | | | | NOx purification rate (%) | |
|---|---|---|---|---|---|---|---|---|---|---|
| | rare earth | | alkali earth | | Ti | Pt | Rh | Mg | initial period | after $SO_2$ endurance |
| A | Ce | 18 | Sr | 15 | 5 | 1.9 | 0.15 | 1 | 83 | 77 |
| B | Ce | 18 | Ca | 15 | 5 | 1.9 | 0.15 | 1 | 82 | 72 |
| C | La | 18 | Sr | 15 | 5 | 1.9 | 0.15 | 1 | 80 | 73 |
| D | Y | 18 | Sr | 15 | 5 | 1.9 | 0.15 | 1 | 81 | 72 |
| E | Ce | 18 | Sr | 15 | 0.1 | 1.9 | 0.15 | 1 | 80 | 71 |
| F | Ce | 18 | Sr | 15 | 1 | 1.9 | 0.15 | 1 | 81 | 73 |
| G | Ce | 18 | Sr | 15 | 30 | 1.9 | 0.15 | 1 | 80 | 72 |
| H | Ce | 18 | Sr | 3 | 5 | 1.9 | 0.15 | 1 | 80 | 70 |
| I | Ce | 18 | Sr | 7.5 | 5 | 1.9 | 0.15 | 1 | 82 | 75 |
| J | Ce | 18 | Sr | 40 | 5 | 1.9 | 0.15 | 1 | 81 | 72 |

Table 7 (continued)

| catalyst composition (wt%) | | | | | | | | | NOx purification rate (%) | |
|---|---|---|---|---|---|---|---|---|---|---|
| | rare earth | | alkali earth | | Ti | Pt | Rh | Mg | initial period | after $SO_2$ endurance |
| K | Ce | 18 | Sr | 15 | 5 | 0.2 | 0.15 | 1 | 80 | 69 |
| L | Ce | 18 | Sr | 15 | 5 | 1 | 0.15 | 1 | 81 | 73 |
| M | Ce | 18 | Sr | 15 | 5 | 4 | 0.15 | 1 | 85 | 76 |
| N | Ce | 18 | Sr | 15 | 5 | 1.9 | 0.15 | 1 | 80 | 73 |
| O | Ce | 18 | Sr | 15 | 5 | 1.9 | 0.5 | 1 | 82 | 74 |
| P | Ce | 18 | Sr | 15 | 5 | 1.9 | 1 | 1 | 81 | 72 |
| Q | Ce | 5 | Sr | 15 | 5 | 1.9 | 0.15 | 1 | 80 | 70 |
| R | Ce | 10 | Sr | 15 | 5 | 1.9 | 0.15 | 1 | 82 | 73 |
| S | Ce | 40 | Sr | 15 | 5 | 1.9 | 0.15 | 1 | 84 | 72 |
| T | Ce | 18 | Sr | 15 | 0 | 1.9 | 0.15 | 1 | 80 | 69 |

Test Manner 1:

As to the honeycomb catalysts A-T, under following conditions, NOx purification reaction activity was evaluated.

A honeycomb catalyst having 6 cc was filled up in a quartz reaction tube having an inner diameter of 25 mm and was arranged in an electric furnace.

The reaction tube was heated according to the electric tube and an inlet port gas temperature of the reaction tube was made to be 300 °C constant and a following model gas was let flow.

As the exhaust gas being supposed in a condition where an internal combustion engine was operated with the stoichiometric air-fuel ratio, the model gas had composition comprised of 0.1% (volume ratio) NO, 0.05% $C_3H_6$, 0.6% CO, 0.5% $O_2$, 0.2% $H_2$, 10% $H_2O$, and the balance of $N_2$ and this model gas was flowed at a space velocity of 30,000 /h.

As the exhaust gas being supposed in a condition where an internal combustion engine was operated with the lean air-fuel ratio, the model gas had composition comprised of 0.06% (volume ratio) NO, 0.04% $C_3H_6O$, 0.1% CO, 5% $O_2$, 10% $H_2O$, and the balance of $N_2$ and this model gas was flowed at a space velocity of 30,000 /h. The above model gas supposed having the stoichiometric air-fuel and the above model gas supposed having the lean air-fuel ratio were flowed alternatively every three (3) minutes each.

In these model exhaust gases, the gaseous oxidizing agent amount is 0.55 vol% for converting into $O_2$ and the gaseous reducing agent amount of 0.625 for converting into $O_2$ consumption ability. Accordingly, both were almost balanced.

The model gas supposed the stoichiometric air-fuel ratio and the model gas supposed the lean air-fuel ratio were flowed alternatively every three (3) minutes each.

The inlet port NOx concentration and the outlet port NOx concentration of the catalyst at this time were measured according to the chemical luminescence detection NOx analyzer. And NOx purification rate after 1 minute when the stoichiometric air-fuel ratio model exhaust gas was changed to the lean air-fuel ratio model exhaust gas was calculated according to a formula shown in Experimentation 1.

Test Manner 2:

Except for that the inlet port gas temperature was heated by the electric furnace at 400 °C constant, according to a manner similar to Test Manner 1, as to each of the honeycomb catalysts A-T, NOx purification reaction activity was evaluated.

Test Manner 3:

Similar to Test Manner 1, the inlet port gas temperature was heated by the electric furnace at 300 °C constant. The gas, in which to the model gas supposed the lean air-fuel ratio 0.005 % $SO_2$ gas was added, was flowed at a space velocity of 30,000 /h for 3 (three) hours. After that, according to a manner similar to Test Manner 1, as to the honeycomb catalysts A-T, NOx purification reaction activity under the inlet port gas temperature of 300 °C was evaluated.

Test Manner 4:

Similar to Test Manner 3, the gas, in which to the model gas supposed the lean air-fuel ratio 0.005 % $SO_2$ gas was added, was flowed at 300 °C for 3 (three) hours. After that, according to a manner similar to Test Manner 2, as to the honeycomb catalysts A-T, NOx purification reaction activity under the inlet port gas temperature of 400 °C was evaluated.
With respect to the honeycomb catalysts A-T, the results of the evaluations according to Test Manners 1 and 3 are shown in Table 7 and the results of the evaluations according to Test Manners 2 and 4 are shown in Table 8.

Table 8

| catalyst composition (wt%) | | | | | | | | | NOx purification rate (%) | |
|---|---|---|---|---|---|---|---|---|---|---|
| | rare earth | | alkali earth | | Ti | Pt | Rh | Mg | initial period | after $SO_2$ endurance |
| A | Ce | 18 | Sr | 15 | 5 | 1.9 | 0.15 | 1 | 76 | 55 |
| B | Ce | 18 | Ca | 15 | 5 | 1.9 | 0.15 | 1 | 73 | 54 |
| C | La | 18 | Sr | 15 | 5 | 1.9 | 0.15 | 1 | 74 | 51 |
| D | Y | 18 | Sr | 15 | 5 | 1.9 | 0.15 | 1 | 70 | 48 |
| E | Ce | 18 | Sr | 15 | 0.1 | 1.9 | 0.15 | 1 | 67 | 45 |
| F | Ce | 18 | Sr | 15 | 1 | 1.9 | 0.15 | 1 | 72 | 50 |
| G | Ce | 18 | Sr | 15 | 30 | 1.9 | 0.15 | 1 | 74 | 53 |
| H | Ce | 18 | Sr | 3 | 5 | 1.9 | 0.15 | 1 | 67 | 46 |
| I | Ce | 18 | Sr | 7.5 | 5 | 1.9 | 0.15 | 1 | 72 | 49 |
| J | Ce | 18 | Sr | 40 | 5 | 1.9 | 0.15 | 1 | 77 | 54 |
| K | Ce | 18 | Sr | 15 | 5 | 0.2 | 0.15 | 1 | 65 | 44 |
| L | Ce | 18 | Sr | 15 | 5 | 1 | 0.15 | 1 | 70 | 51 |
| M | Ce | 18 | Sr | 15 | 5 | 4 | 0.15 | 1 | 80 | 54 |
| N | Ce | 18 | Sr | 15 | 5 | 1.9 | 0.15 | 1 | 66 | 45 |
| O | Ce | 18 | Sr | 15 | 5 | 1.9 | 0.5 | 1 | 76 | 52 |
| P | Ce | 18 | Sr | 15 | 5 | 1.9 | 1 | 1 | 72 | 48 |
| Q | Ce | 5 | Sr | 15 | 5 | 1.9 | 0.15 | 1 | 68 | 44 |
| R | Ce | 10 | Sr | 15 | 5 | 1.9 | 0.15 | 1 | 72 | 50 |
| S | Ce | 40 | Sr | 15 | 5 | 1.9 | 0.15 | 1 | 75 | 52 |
| T | Ce | 18 | Sr | 15 | 0 | 1.9 | 0.15 | 1 | 65 | 43 |

Each of Embodiment catalysts A-S has a high NOx purification rate after $SO_2$ endurance and a strong $SO_2$ resistivity in comparison with the catalyst T which does not contain titanium (Ti).
As to the honeycomb catalyst A, a X-ray analyzing spectrum was measured and the crystallization structure was identified. In the X-ray analyzing spectrum of the honeycomb catalyst A, there was no peak caused by titania ($TiO_2$) and it was considered that titania ($TiO_2$) was maintained a non-crystalline structure. It was understood that strontium (Sr) as alkali earth metals was held as carbonate.

Experimentation 3:

Cerium nitrate ($Ce(NO_3)_2$) solution was impregnated in alumina ($Al_2O_3$) and after drying at 200 °C the alumina was calcined at 600 °C for 1 hour. In succession, a mixture solution obtained by mixing strontium nitrate ($Sr(NO_3)_2$) with silica-sol was impregnated, similarly in the cerium (Ce) coated alumina was dried and calcined. With the above process, the catalyst powders were obtained, such catalyst powders were comprised of, to 100 wt% alumina ($Al_2O_3$), 18 wt% Ce, 15 wt% Sr, 4 wt% $SiO_2$, 1.6 wt% Pt, 0.15 wt% Rh, and 1.5 wt% Mg. Alumina-sol and'aluminum nitrate ($Al(NO_3)_2$) were added to the catalyst powders and the slurry was obtained by agitating and mixed with them and the obtained slurry was coated to a cordierite made honeycomb (400 cell/in$^2$). The calcination temperature was about 450 °C and Embodiment Catalyst 100 having a final coating amount of 200 g/l.

According to the method similarly to the above, Embodiment Catalysts 100-105 were obtained.

The composition of the prepared catalysts are shown in Table 9. In Table 9, the support order in this Table 9 indicates that after a first component has held, a second component is held and next a third component and a fourth component are held successively. Further, the supported amount is indicated at before of the supported metal symbol.

Table 9

| Embodiment Catalyst | support order | | | |
|---|---|---|---|---|
| | first component | second component | third component | fourth component |
| 100 | 18 wt% Ce | 15 wt% Sr<br>4 wt% $SiO_2$ | 0.15 wt% Rh<br>1.6 wt% Pt | 1.5 wt% Mg |
| 101 | 18 wt% Ce | 15 wt% Sr<br>4 wt% $SiO_2$ | 0.15 wt% Rh<br>1.6 wt% Pt | |
| 102 | 18 wt% Ce | 7 wt% Sr<br>7 wt% Ca<br>4 wt% $SiO_2$ | 0.15 wt% Rh<br>1.6 wt% Pt | |
| 103 | 18 wt% Ce | 15 wt% Sr | 0.15 wt% Rh<br>1.6 wt% Pt | |
| 104 | 18 wt% Ce | 15 wt% Ca | 0.15 wt% Rh<br>1.6 wt% Pt | |
| 105 | 18 wt% Ce | 7 wt% Sr<br>7 wt% Ca | 0.15 wt% Rh<br>1.6 wt% Pt | |

The testing manner was similarly to (1), (2) and (3) shown in Experimentation 1 and further the composition of the model gas was similarly to that of shown in Experimentation 1.

Table 10 shows NOx gas purification rate of after 1 (one) minute from the start of flow the stoichiometric model exhaust gas and the purification rate of after one minute from the start of the lean model exhaust gas obtained by the honeycomb catalyst which are initial period and after $SO_2$ poisoning. NOx gas purification rate was calculated following to the formula shown in Experimentation 1.

Table 10

| Embodiment Catalyst | initial period NOx purification rate (%) | | NOx purification rate (%) poisoning by $SO_2$ | | |
|---|---|---|---|---|---|
| | stoichiometric | lean | stoichiometric | lean | lowering rate (%) of lean to initial |
| 100 | 100 | 80 | 100 | 75 | - 6 |
| 101 | 100 | 50 | 100 | 43 | -14 |
| 102 | 100 | 65 | 100 | 59 | - 9 |
| 103 | 100 | 65 | 100 | 50 | -23 |
| 104 | 100 | 47 | 100 | 32 | -32 |
| 105 | 100 | 58 | 100 | 40 | -31 |

Further, the lowering rate of the lean NOx gas purification rate by $SO_2$ poisoning was calculated by the following formula.

Lowering rate of NOx gas purification rate =

(initial period NOx gas purification rate -

NOx gas purification rate after $SO_2$

poisoning) / (initial period NOx gas

purification rate (formula 2)

The lowering rate of the lean NOx gas purification rate by $SO_2$ poisoning according to the support of $SiO_2$ is improved at -5% - -15%.

In Embodiment Catalyst 100, in case where $SiO_2$ supported amount was varied NOx gas purification rate was measured. The catalyst preparation manner and the experimental manner were similarly to those of Embodiment Catalyst 100. The results are shown in Table 11. By supporting $SiO_2$, the initial period NOx gas purification rate is improved. Further, the support amount of $SiO_2$ was 0.6 wt% - 5 wt%, NOx gas purification rate after $SO_2$ poisoning can obtain 60 %.

Table 11

| $SiO_2$ supported amount (wt%) | initial period NOx purification rate (%) | | NOx purification rate (%) after $SO_2$ poisoning | |
|---|---|---|---|---|
| | stoichiometric | lean | stoichiometric | lean |
| 0 | 100 | 55 | 100 | 50 |
| 0.5 | 100 | 55 | 100 | 50 |
| 0.8 | 100 | 70 | 100 | 63 |
| 1 | 100 | 75 | 100 | 68 |
| 2 | 100 | 80 | 100 | 75 |
| 3 | 100 | 80 | 100 | 75 |
| 4 | 100 | 78 | 100 | 72 |
| 5 | 100 | 65 | 100 | 60 |
| 8 | 100 | 50 | 100 | 53 |
| 9 | 100 | 55 | 100 | 49 |
| 10 | 100 | 50 | 100 | 46 |

## Claims

1. An exhaust gas purification apparatus for use in an internal combustion engine (99), comprising:

   an exhaust gas duct connected to said engine (99), through which the exhaust gas flows, and
   a catalyst (18) disposed in said exhaust gas duct, for adsorbing NOx under lean combustion conditions.

2. Apparatus according to claim 1,
   wherein a manifold catalyst (17) is disposed in said exhaust gas duct after the engine (99) upstream of said catalyst (18), having functions of a three way catalyst and a combustion catalyst,
   wherein said manifold catalyst (17) arises its working temperature in a short time after engine starting in order to allow the purification of hydrocarbons (HC) and carbon monoxide (CO) immediately after engine starting, or
   wherein a three way catalyst or a combustion catalyst is disposed in said exhaust gas duct at the upstream of said catalyst (18).

3. Apparatus according to claim 1 or 2, wherein a post-catalyst (24) is disposed downstream of said catalyst (18), having functions of a combustion catalyst to improve HC purification and/or of a three way catalyst to improve the stoichiometric operation time of said apparatus and/or to reinforce the three-way function during the stoichiometric operation time.

**4.** Apparatus according to at least one of claims 1 to 3, wherein a gaseous reducing agent injector (23) is provided upstream of said catalyst (18) in said exhaust gas duct in order to allow the adding of fuel to the exhaust gas in order to establish operation conditions of the engine regardless of the conditions of the catalyst (18).

**5.** Apparatus for controlling the exhaust gas purification of an internal combustion engine (99), comprising:

an engine control unit (25) for judging the NOx purification ability of a catalyst (18) disposed in an exhaust gas flow of said engine (99), wherein, when said engine control unit (25) judges an NOx purification ability lower than a predetermined value, it switches to a rich or stoichiometric air/fuel ratio for recovering the NOx purification ability of said catalyst (18).

**6.** Apparatus according to claim 5, **characterized in that**
said engine control unit (25) estimates NOx accumulation ($\Sigma E_N$) in said catalyst (18) during operation of said engine (99) in a lean operation mode based on detected vehicle operating parameters,
wherein
said engine control unit (25) switches said engine (99) to operation with a rich or stoichiometric air/fuel ratio when estimated accumulated NOx ($\sum E_N$) exceeds a preset value ($(E_N)_C$).

**7.** Apparatus according to claim 6, **characterized by**
an exhaust gas temperature sensor arranged in said exhaust gas flow of said engine (99), wherein
said engine control unit (25) determines said NOx amount ($E_N$) in a unit time using an exhaust gas temperature which is determined based on an output signal of said exhaust gas temperature sensor and signals relating to various kinds of engine operation conditions which affect NOx concentration in the exhaust gas.

**8.** Apparatus according to at least one of claims 5 to 7, **characterized by**
an oxygen sensor (19) arranged in said exhaust gas flow of said engine (99), wherein
said engine control unit (25) determines an accumulated value of oxygen ($\sum Qo$) in said exhaust gas based on an output signal of said oxygen sensor (19), switches said engine (99) to operation with a rich or stoichiometric air/fuel ratio when said accumulated value ($\sum Qo$) exceeds an upper limitation value ((Qo)c).

**9.** Apparatus according to claim 8, **characterized in that**
said determination of said accumulated value of oxygen ($\sum Qo$) is performed only during operation of said engine (99) in said lean operating mode.

**10.** Apparatus according to claim 8, **characterized in that** said determination of said accumulated value of oxygen ($\sum Qo$) is performed during all operation modes of said engine (99).

**11.** Apparatus according to at least one of claims 5 to 10,
**characterized in that**
a first NOx sensor (22) is disposed upstream of said catalyst (18) in said exhaust gas flow, and
said engine control unit (25) determines an accumulated value of NOx ($\sum QN$) in said exhaust gas, based on an output of said first NOx sensor (22),
wherein said engine control unit (25) switches said engine (99) to operation with a rich or stoichiometric air/fuel ratio when said accumulated value ($\sum QN$) exceeds an upper limitation value (QN)C).

**12.** Apparatus according to at least one of claims 5 to 11, **characterized in that** said engine control unit (25) determines an accumulated lean operation time ($\Sigma H_L$) and switches said engine (99) to operation with a rich or stoichiometric air/fuel ratio, when said accumulated lean operation time ($\Sigma H_L$) exceeds an upper limitation value $(H_L)_C$.

**13.** Apparatus according to at least one of claims 5 to 12, **characterized in that** a second NOx sensor (21) is disposed downstream of said catalyst (18) and said engine control unit (25) determines an accumulated value of NOx ($\Sigma C_N$) based on an output of said second NOx sensor (21), wherein said engine control unit (25) switches said engine (99) to operation with a rich or stoichiometric air/fuel ratio when said accumulated value of NOx ($\Sigma C_N$) exceeds an upper limitation value ($(C_N)_C$).

**14.** Apparatus according to at least one of claims 5 to 13,

wherein the control unit (25) is shifting the air/ fuel ratio to a rich side when it is judged that the catalyst (18) has no NOx adsorbing ability, wherein the rich shift time ($T_r$) is counted and in case where the lapse time ($T_r$) exceeds over a predetermined time ($(T_r)_C$) the rich shift is finished.

**15.** Apparatus according to at least one of claims 5 to 14, wherein said internal combustion engine (99) is a gasoline engine.

**16.** Apparatus according to at least one of claims 5 to 15, wherein said internal combustion engine (99) is a direct fuel injection system engine.

**17.** Apparatus according to at least one of claims 5 to 16, further comprising a manifold catalyst (19) disposed in said exhaust gas duct immediately after the engine (99), upstream of said main catalyst (18), said manifold catalyst (19) having functions of a three way catalyst and a combustion catalyst.

**18.** Apparatus according to at least one of claims 5 to 17, further comprising a post-catalyst (24) provided downstream of said catalyst (18).

**19.** Apparatus according to at least one of claims 5 to 18,
wherein a gaseous reducing agent injector (23) is provided upstream of said catalyst (18) in said exhaust gas duct in order to allow the adding of fuel to the exhaust gas in order to establish operation conditions of the engine regardless of the conditions of the catalyst (18).

**20.** Apparatus according to claim 19, wherein the said gaseous reducing agent injector (23) adds fuel to the exhaust gas when a rich shift is indicated.

**21.** A method for preparing a catalyst (18) for purifying the exhaust gas from an internal combustion engine (99) which chemically adsorbs NOx in the lean operation mode and which comprises

- a base member,
- a heat resistant porous carrier member supported on said base member, and
- catalyst components supported on said carrier body,

wherein the method comprises the steps of

a) preparing a slurry of the heat resistant porous carrier member, coating the surface of the base member with the obtained slurry, drying the base member and calcinating the dried base member;
b) immersing the above calcinated base member in a solution of a salt of a rare earth metal, drying the impregnated base member and calcinating the dried base member;
c) immersing the above calcinated base member in a solution of one or several metal salts which comprises

- a solution of a salt of an alkali metal or a mixed solution of the salts of several alkali metals and/or
- a solution of a salt of an alkali earth metal or a mixed solution of the salts of several alkali earth metals with the exception of barium salts,

drying the impregnated base member and calcinating the dried base member;
d) immersing the above calcinated base member in a solution of a salt of a noble metal or in a mixed solution of the salts of several noble metals, drying the impregnated base member and calcinating the dried base member.

**22.** The method according to claim 21, wherein

- the alkali metal salt/salts is/are selected from sodium (Na) and potassium (K) salts,
- the alkali earth metal salt/ salts is/ are selected from magnesium (Mg), calcium (Ca) and strontium (Sr) salts,
- the noble metal salt/ salts is/ are selected from platinum (Pt), palladium (Pd) and rhodium (Rh) salts.

**23.** The method according to claim 21 or 22, wherein the rare earth metal salt/ salts is/ are selected from cerium (Ce), lanthanum (La) and iridium (Ir) salts.

**24.** The method according to at least one of claims 21 to 23, wherein the rare earth metals are used in an amount of 5-30 wt%, the alkali metals in an amount of 5-20 wt%, the alkali earth metals in an amount of 3-40 wt%, platinum in an amount of 0.5-3 wt%, rhodium in an amount of 0.05-0,3 wt% and palladium in an amount of 0.5-15 wt% palladium, based on 100 wt % of the porous carrier member.

**25.** The method according to at least one of claims 21 to 24, wherein the mixed solution which is used in step c) additionally comprises

- a solution of a titania sol, an organo titanium compound, titanium sulfat or titanium chloride and/or
- a solution of a silica sol.

**26.** The method according to claim 25, wherein titanium is used in an amount of 0.1-30 wt% and silicon is used in an amount of 0,6-5 wt%.

**27.** The method according to at least one of claims 21 to 26, comprising an additional step e) in which the calcinated base member which is obtained in step d) is immersed into a solution comprising a magnesium salt, where after the base member is dried and calcinated.

**28.** The method according to at least one of claims 21 to 27, wherein the base member is dried at a temperature of 200 °C in all steps a) to e) and is calcinated for 1 hour at a temperature of 450 °C in the steps a), d), e) and at a temperature of 600 °C in the steps b) and c).

**29.** The method according to at least one of claims 21 to 28, wherein the final catalyst is submitted to a thermal treatment at a temperature of 700 °C.

**30.** The method according to claim 29, wherein the thermal treatment is carried out for 5 hours under an oxidizing atmosphere.

**31.** The method according to at least one of claims 21 to 30, wherein the anion of the salts is the nitrate anion.

**32.** The method according to at least one of claims 21 to 31, wherein the base member consists of cordierite and the heat resistant porous carrier member consists of alumina and wherein step a) comprises mixing alumina powders with alumina-sol obtained by peptizing boehmit by nitric acid.

**33.** The method according to at least one of claims 21 to 32, wherein the heat resistant porous carrier member consists of La-β-$Al_2O_3$ with 1-20 mol-% La.

**34.** The method according to at least one of claims 21 to 33, wherein the base member has a honeycomb shape, a pellet shape, a plate shape, a particle shape or a powder shape.

**35.** A method for preparing a catalyst (18) for purifying the exhaust gas from an internal combustion engine (99) which chemically adsorbs NOx in the lean operation mode and which comprises

- a base member,
- a heat resistant porous carrier member supported on said base member, and
- catalyst components supported on said carrier body,

wherein the method comprises the steps of

a) impregnating a first part of the porous carrier member with a solution of a salt of a rare earth metal, drying the impregnated porous carrier member and calcinating the dried porous carrier member to obtain a first catalyst powder;
b) impregnating a second part of the porous carrier member with a solution of one or several metal salts which comprises

- a solution of a salt of an alkali metal or a mixed solution of the salts of several alkali metals and/or
- a solution of a salt of an alkali earth metal or a mixed solution of the salts of several alkali earth metals with the exception of barium salts,

drying the impregnated porous carrier member and calcinating the dried porous carrier member to obtain a second catalyst powder;

c) impregnating a third part of the porous carrier member with a solution of a salt of a noble metal or with a mixed solution of the salts of several noble metals, drying the impregnated porous carrier member and calcinating the dried porous carrier member to obtain a third catalyst powder;

d) preparing a slurry of the above first, second and third catalyst powders and of a further amount of the porous carrier member and

e) coating the base member with the obtained slurry, drying the coated base member and calcinating the dried base member.

**36.** A catalyst (18) for purifying the exhaust gas from an internal combustion engine (99) which chemically adsorbs NOx in the lean operation mode and which comprises

- a base member,
- a heat resistant porous carrier member supported on said base member, through which the exhaust gas comprising the NOx may flow, and
- catalyst components supported on said carrier body, which is obtainable according to at least one of claims 21 to 35.

**37.** An apparatus according to at least one of claims 1 to 4 or an apparatus according to at least one of claims 5 to 20, wherein
said catalyst (18) chemically adsorbs and retains NOx in the presence of said exhaust gas when said engine (99) operates in a lean operation mode and NOx retained on said catalyst (18) is reduced to $N_2$ in the presence of said exhaust gas when said engine (99) operates with a rich or stoichiometric air fuel ratio.

**38.** An apparatus according to claim 37 or at least one of claims 1 to 4 or an apparatus according to at least one of claims 5 to 20,
wherein the catalyst (18) is a catalyst according to claim 36,
wherein the catalyst (18) which chemically adsorbs NOx in the lean operation mode comprises

- at least one rare earth metal,
- at least one alkali metal and/or at least one alkali earth metal with the exception of barium, and
- at least one noble metal.

**39.** The apparatus according to claim(s) 37 and/or 38, wherein

- the rare earth metal(s) is (are) selected from cerium (Ce), lanthanum (La) and iridium (Ir),
- the alkali metal(s) is (are) selected from sodium (Na) and potassium (K),
- the alkali earth metal(s) is (are) selected from magnesium (Mg), calcium (Ca) and strontium (Sr),
- the noble metal(s) is (are) selected from platinum (Pt), palladium (Pd) and rhodium (Rh).

**40.** The apparatus according to at least one of claims 37 to 39, wherein the catalyst further comprises titania and/or silica.

FIG. 1

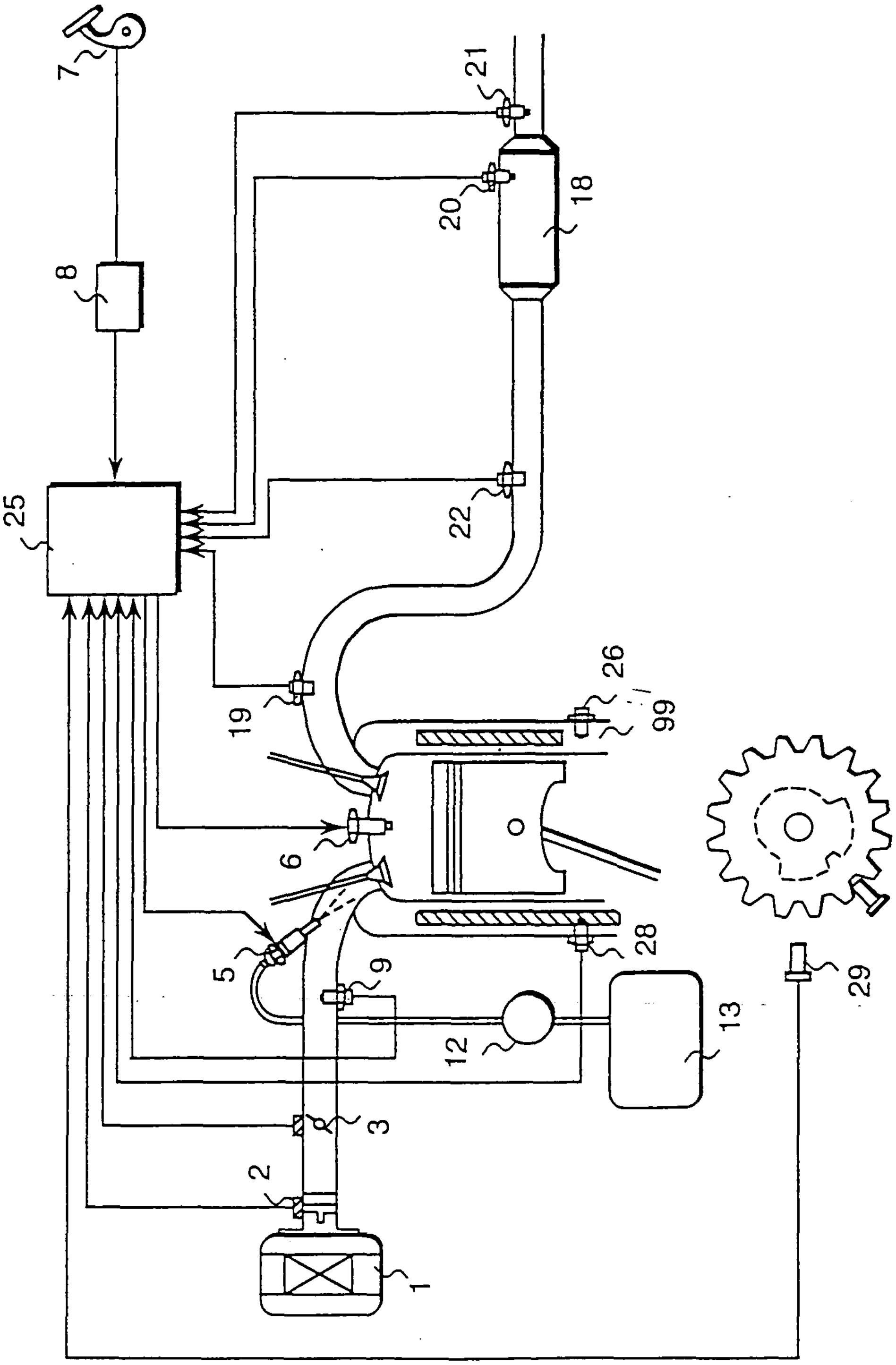

FIG. 2

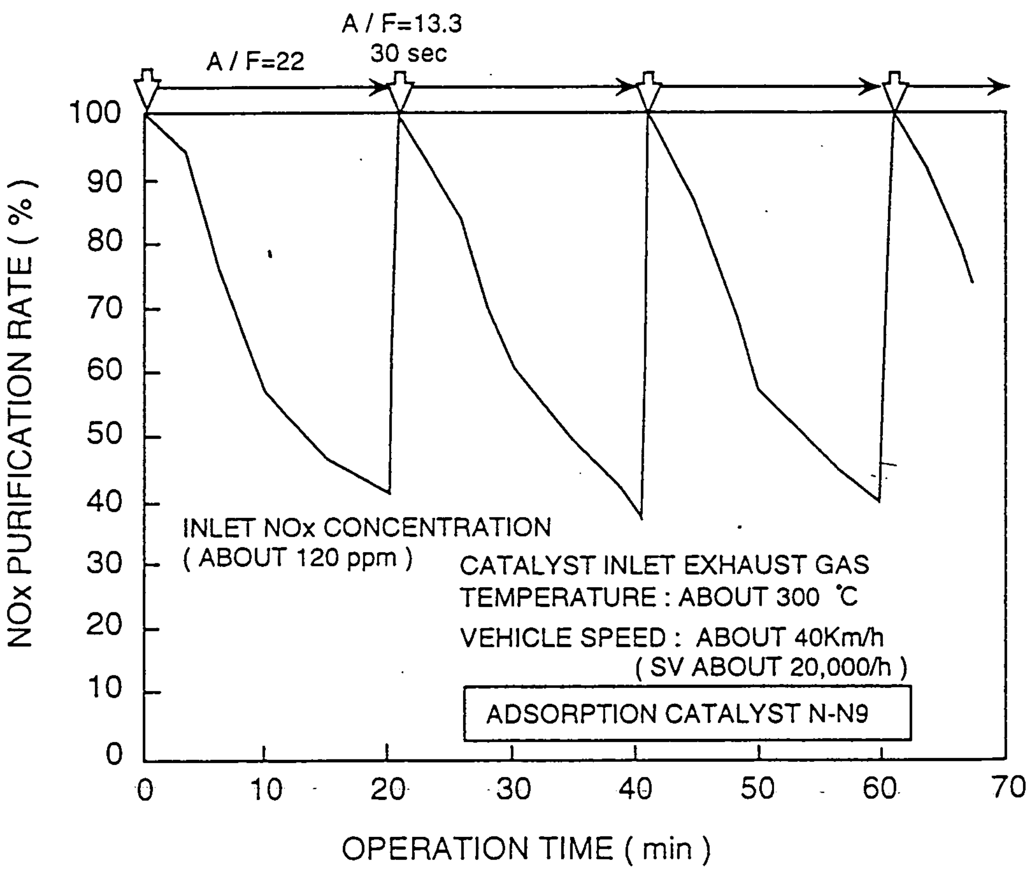
A / F=13.3
30 sec
A / F=22
100
90
80
70
60
50
40
30
20
10
0
NOx PURIFICATION RATE ( % )
INLET NOx CONCENTRATION
( ABOUT 120 ppm )
CATALYST INLET EXHAUST GAS
TEMPERATURE : ABOUT 300 ℃
VEHICLE SPEED : ABOUT 40Km/h
( SV ABOUT 20,000/h )
ADSORPTION CATALYST N-N9
0
10
20
30
40
50
60
70
OPERATION TIME ( min )

FIG. 3

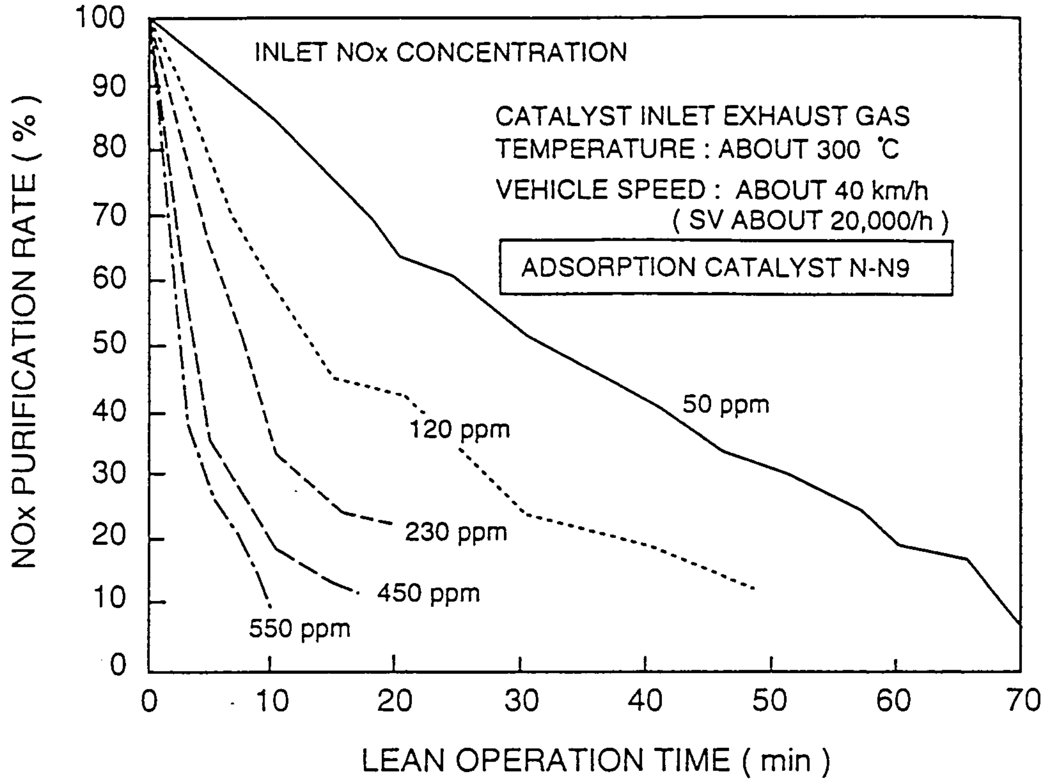
100
90
80
70
60
50
40
30
20
10
0
NOx PURIFICATION RATE ( % )
INLET NOx CONCENTRATION
CATALYST INLET EXHAUST GAS
TEMPERATURE : ABOUT 300 ℃
VEHICLE SPEED : ABOUT 40 km/h
( SV ABOUT 20,000/h )
ADSORPTION CATALYST N-N9
50 ppm
120 ppm
230 ppm
450 ppm
550 ppm
0
10
20
30
40
50
60
70
LEAN OPERATION TIME ( min )

FIG. 4

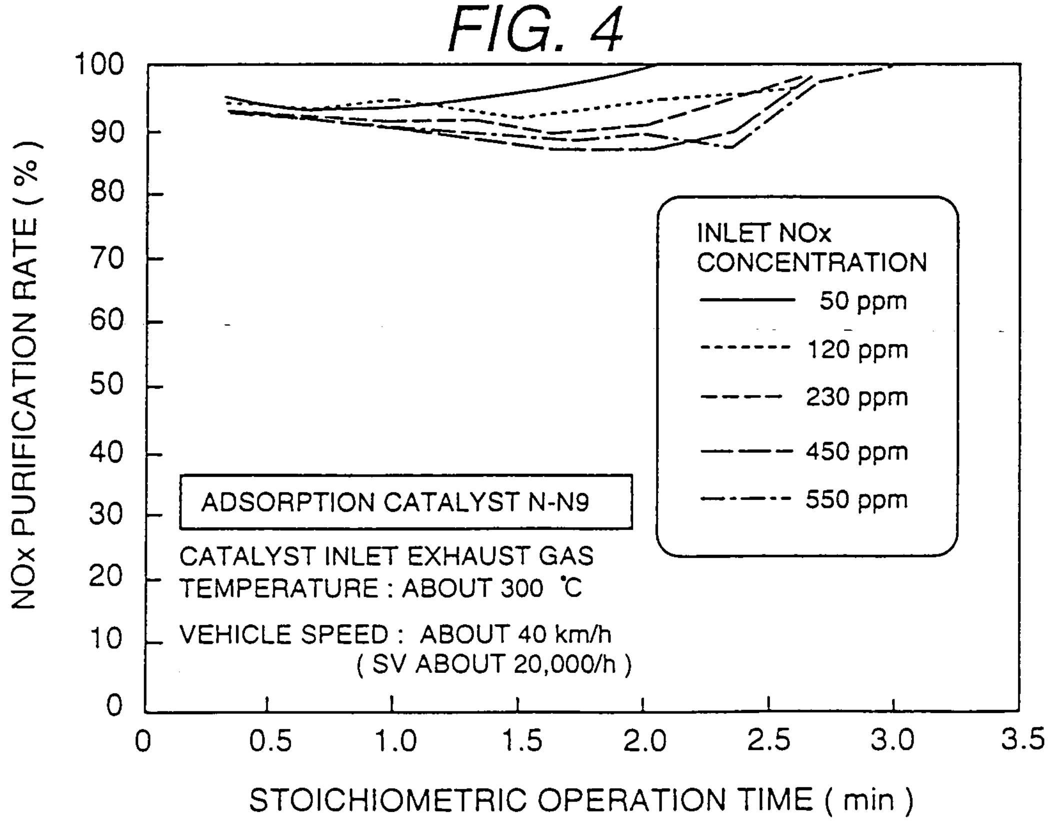
100
90
80
70
60
50
40
30
20
10
0
NOx PURIFICATION RATE ( % )
INLET NOx
CONCENTRATION
50 ppm
120 ppm
230 ppm
450 ppm
550 ppm
ADSORPTION CATALYST N-N9
CATALYST INLET EXHAUST GAS
TEMPERATURE : ABOUT 300 ℃
VEHICLE SPEED : ABOUT 40 km/h
( SV ABOUT 20,000/h )
0
0.5
1.0
1.5
2.0
2.5
3.0
3.5
STOICHIOMETRIC OPERATION TIME ( min )

FIG. 5A

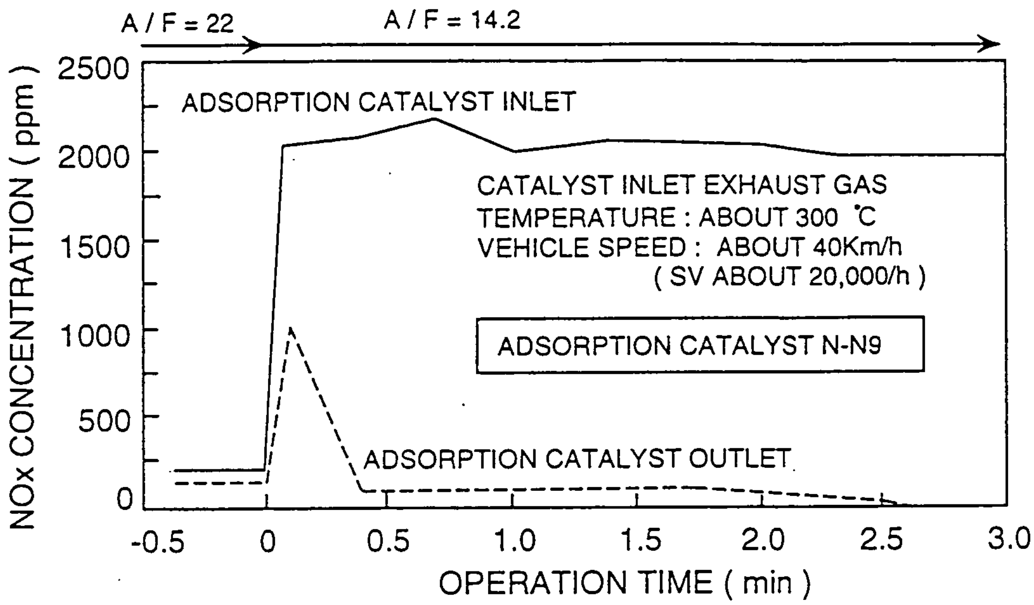
A / F = 22
A / F = 14.2
NOx CONCENTRATION ( ppm )
2500
2000
1500
1000
500
0
ADSORPTION CATALYST INLET
CATALYST INLET EXHAUST GAS
TEMPERATURE : ABOUT 300 ℃
VEHICLE SPEED : ABOUT 40Km/h
( SV ABOUT 20,000/h )
ADSORPTION CATALYST N-N9
ADSORPTION CATALYST OUTLET
-0.5
0
0.5
1.0
1.5
2.0
2.5
3.0
OPERATION TIME ( min )

FIG. 5B

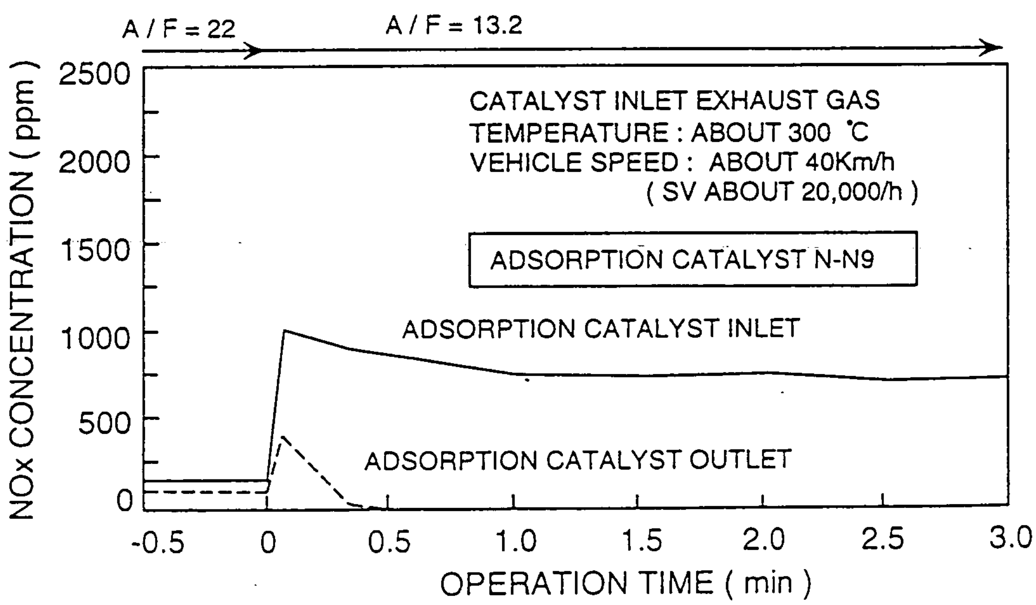
A / F = 22
A / F = 13.2
NOx CONCENTRATION ( ppm )
2500
2000
1500
1000
500
0
CATALYST INLET EXHAUST GAS
TEMPERATURE : ABOUT 300 ℃
VEHICLE SPEED : ABOUT 40Km/h
( SV ABOUT 20,000/h )
ADSORPTION CATALYST N-N9
ADSORPTION CATALYST INLET
ADSORPTION CATALYST OUTLET
-0.5
0
0.5
1.0
1.5
2.0
2.5
3.0
OPERATION TIME ( min )

FIG. 6A

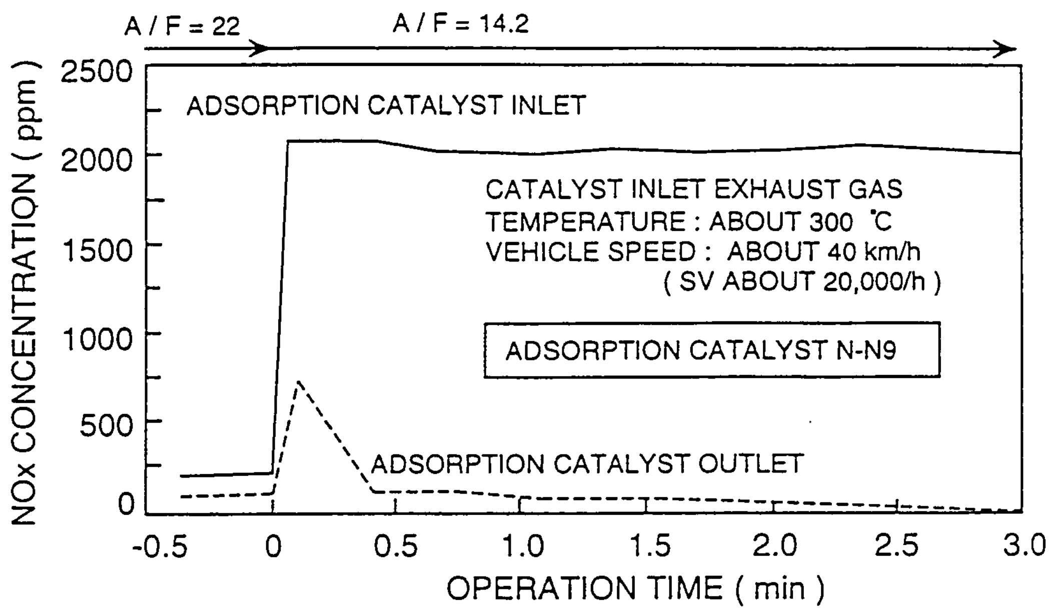
A / F = 22
A / F = 14.2
NOx CONCENTRATION ( ppm )
2500
2000
1500
1000
500
0
ADSORPTION CATALYST INLET
CATALYST INLET EXHAUST GAS
TEMPERATURE : ABOUT 300 ℃
VEHICLE SPEED : ABOUT 40 km/h
( SV ABOUT 20,000/h )
ADSORPTION CATALYST N-N9
ADSORPTION CATALYST OUTLET
-0.5
0
0.5
1.0
1.5
2.0
2.5
3.0
OPERATION TIME ( min )

FIG. 6B

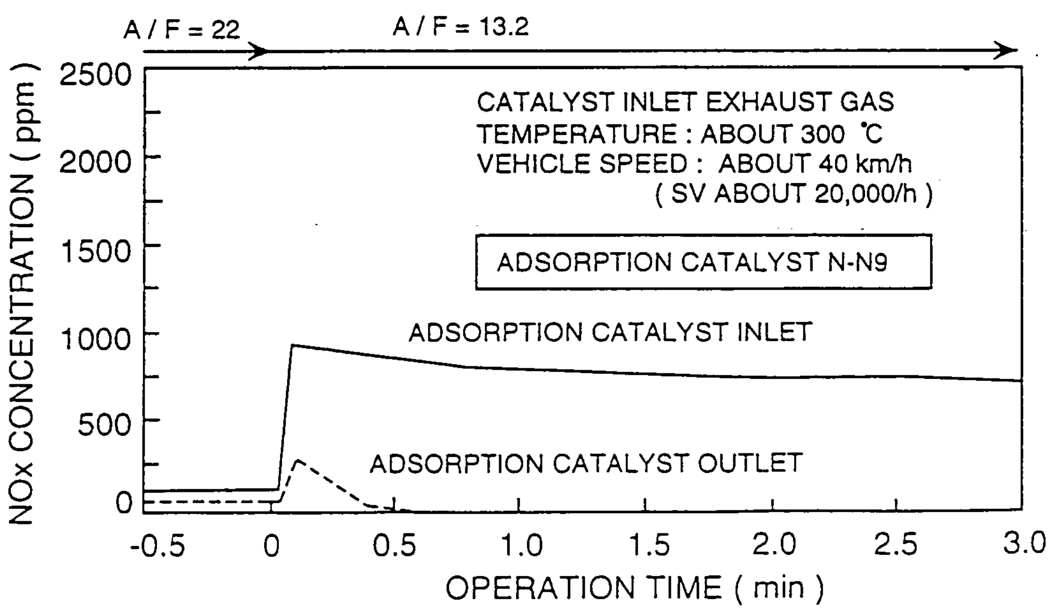
A / F = 22
A / F = 13.2
NOx CONCENTRATION ( ppm )
2500
2000
1500
1000
500
0
CATALYST INLET EXHAUST GAS
TEMPERATURE : ABOUT 300 ℃
VEHICLE SPEED : ABOUT 40 km/h
( SV ABOUT 20,000/h )
ADSORPTION CATALYST N-N9
ADSORPTION CATALYST INLET
ADSORPTION CATALYST OUTLET
-0.5
0
0.5
1.0
1.5
2.0
2.5
3.0
OPERATION TIME ( min )

FIG. 7

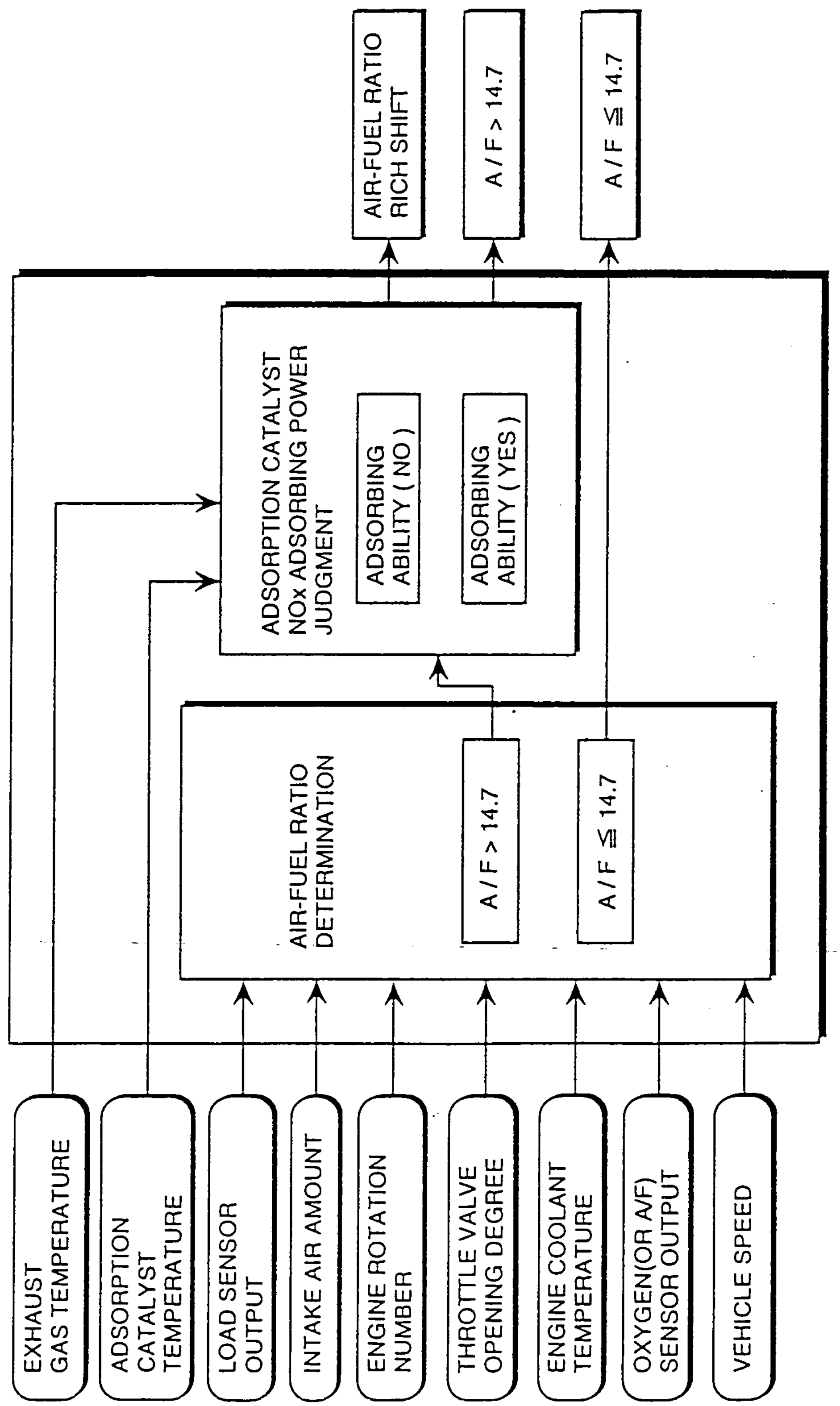

EXHAUST GAS TEMPERATURE
ADSORPTION CATALYST TEMPERATURE
LOAD SENSOR OUTPUT
INTAKE AIR AMOUNT
ENGINE ROTATION NUMBER
THROTTLE VALVE OPENING DEGREE
ENGINE COOLANT TEMPERATURE
OXYGEN(OR A/F) SENSOR OUTPUT
VEHICLE SPEED
AIR-FUEL RATIO DETERMINATION
A / F > 14.7
A / F ≦ 14.7
ADSORPTION CATALYST NOx ADSORBING POWER JUDGMENT
ADSORBING ABILITY ( NO )
ADSORBING ABILITY ( YES )
AIR-FUEL RATIO RICH SHIFT
A / F > 14.7
A / F ≦ 14.7

FIG. 8

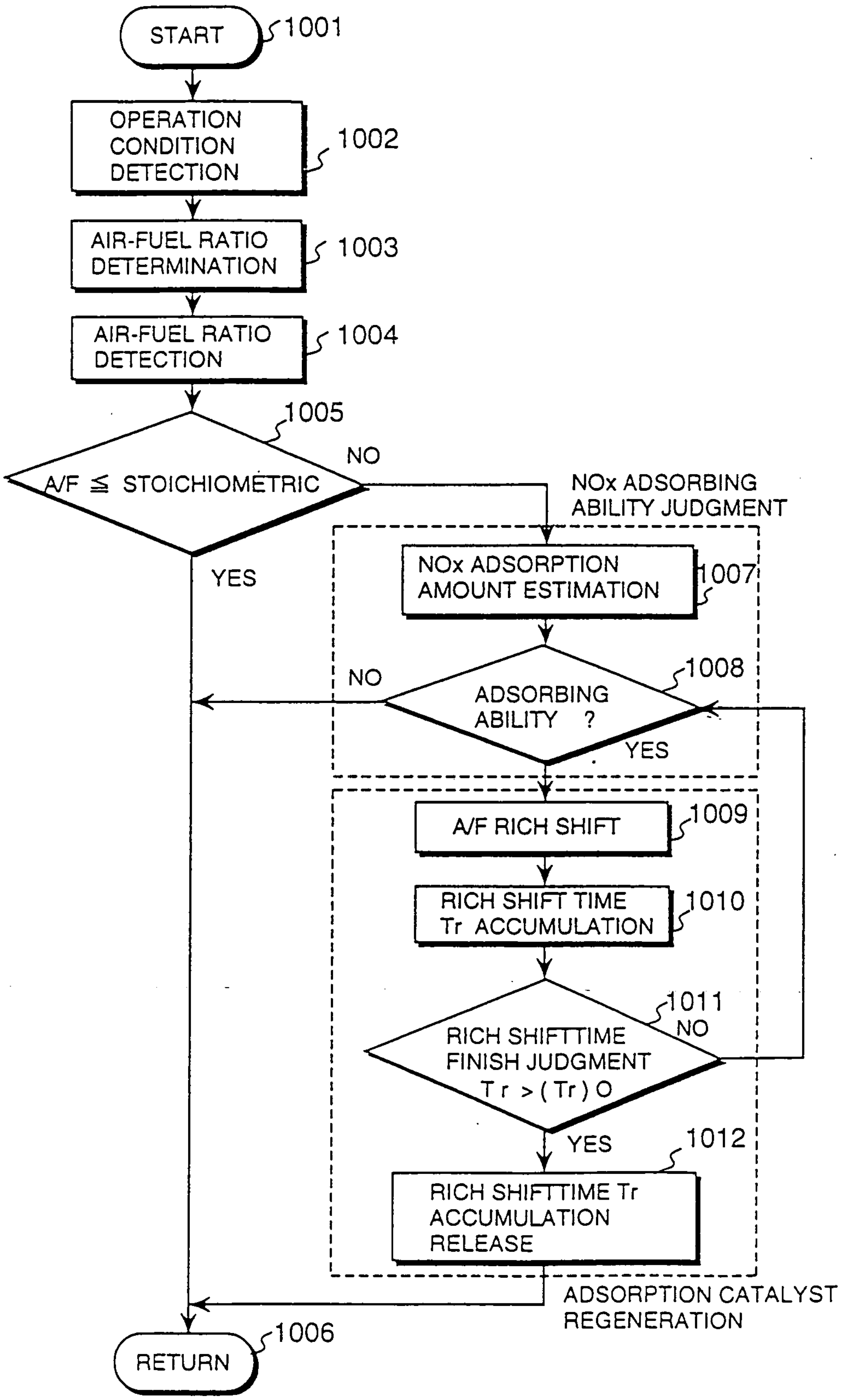
START
1001
OPERATION CONDITION DETECTION
1002
AIR-FUEL RATIO DETERMINATION
1003
AIR-FUEL RATIO DETECTION
1004
1005
A/F ≦ STOICHIOMETRIC
NO
YES
NOx ADSORBING ABILITY JUDGMENT
NOx ADSORPTION AMOUNT ESTIMATION
1007
NO
ADSORBING ABILITY ?
1008
YES
A/F RICH SHIFT
1009
RICH SHIFT TIME Tr ACCUMULATION
1010
RICH SHIFTTIME FINISH JUDGMENT Tr > (Tr) O
1011
NO
YES
1012
RICH SHIFTTIME Tr ACCUMULATION RELEASE
ADSORPTION CATALYST REGENERATION
RETURN
1006

FIG. 9

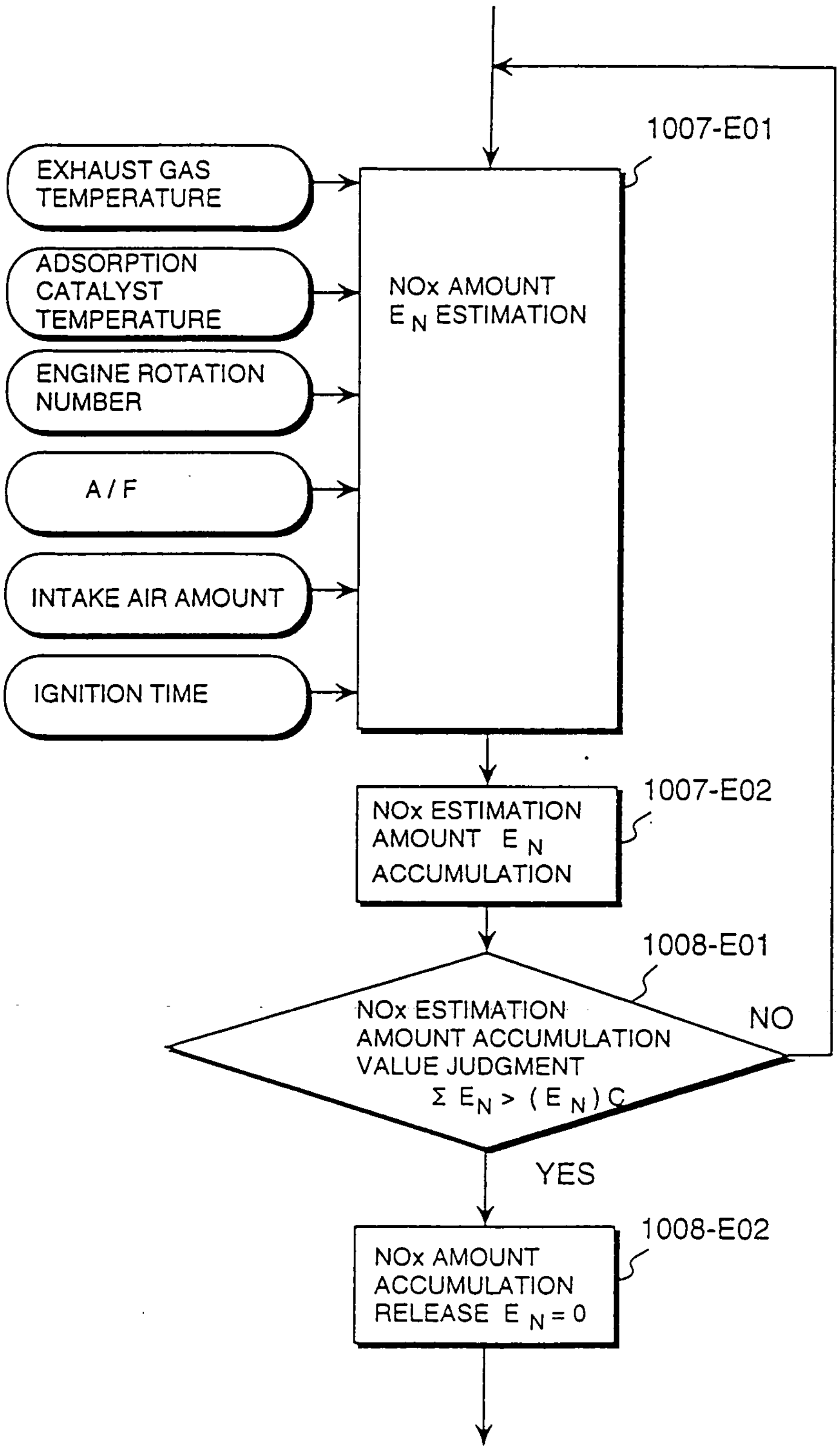
1007-E01
EXHAUST GAS TEMPERATURE
ADSORPTION CATALYST TEMPERATURE
ENGINE ROTATION NUMBER
A / F
INTAKE AIR AMOUNT
IGNITION TIME
NOx AMOUNT
E N ESTIMATION
1007-E02
NOx ESTIMATION AMOUNT E N ACCUMULATION
1008-E01
NOx ESTIMATION AMOUNT ACCUMULATION VALUE JUDGMENT
Σ EN > ( E N ) C
NO
YES
1008-E02
NOx AMOUNT ACCUMULATION RELEASE E N = 0

FIG. 10

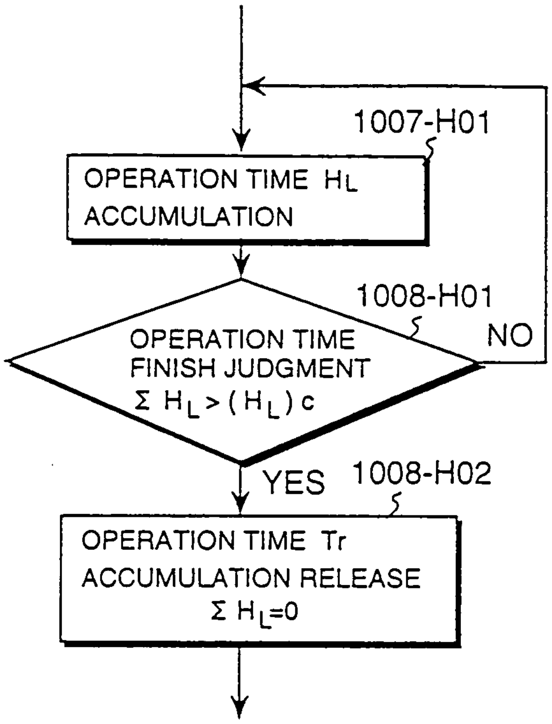
1007-H01
OPERATION TIME $H_L$ ACCUMULATION
1008-H01
OPERATION TIME FINISH JUDGMENT $\Sigma H_L > (H_L)c$
NO
YES
1008-H02
OPERATION TIME Tr ACCUMULATION RELEASE $\Sigma H_L=0$

FIG. 11

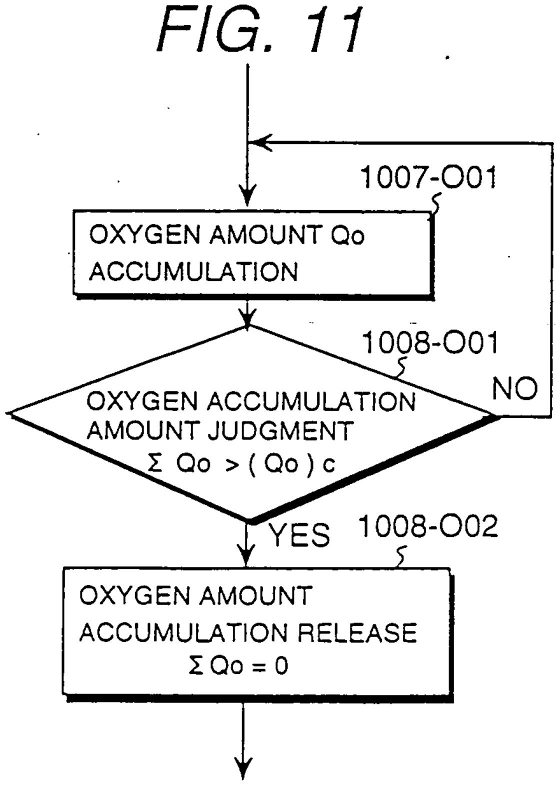
1007-O01
OXYGEN AMOUNT Qo ACCUMULATION
1008-O01
OXYGEN ACCUMULATION AMOUNT JUDGMENT $\Sigma Qo > (Qo)c$
NO
YES
1008-O02
OXYGEN AMOUNT ACCUMULATION RELEASE $\Sigma Qo = 0$

FIG. 12

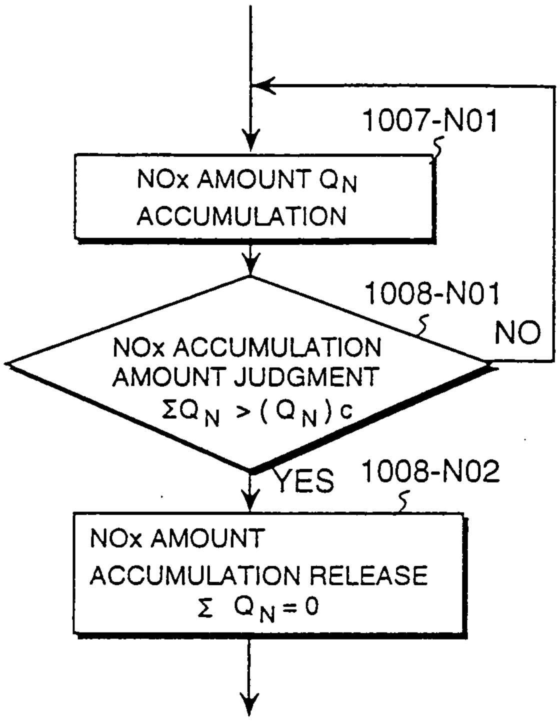
1007-N01
NOx AMOUNT $Q_N$ ACCUMULATION
1008-N01
NO
NOx ACCUMULATION AMOUNT JUDGMENT $\Sigma Q_N > (Q_N)c$
YES
1008-N02
NOx AMOUNT ACCUMULATION RELEASE $\Sigma Q_N = 0$

FIG. 13

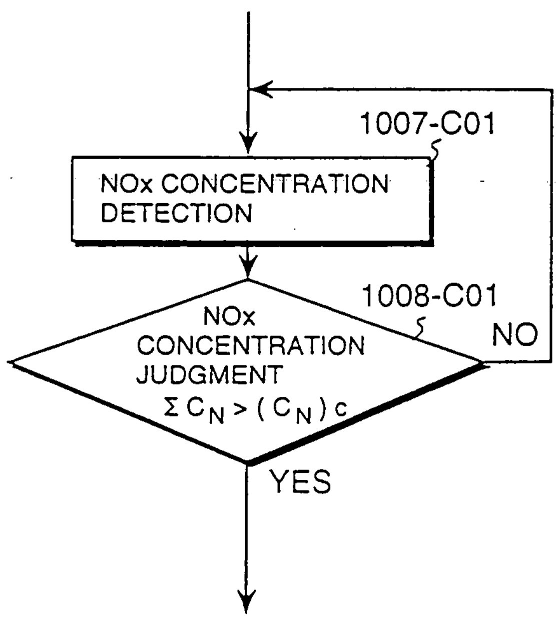
1007-C01
NOx CONCENTRATION DETECTION
1008-C01
NO
NOx CONCENTRATION JUDGMENT $\Sigma C_N > (C_N)c$
YES

FIG. 14

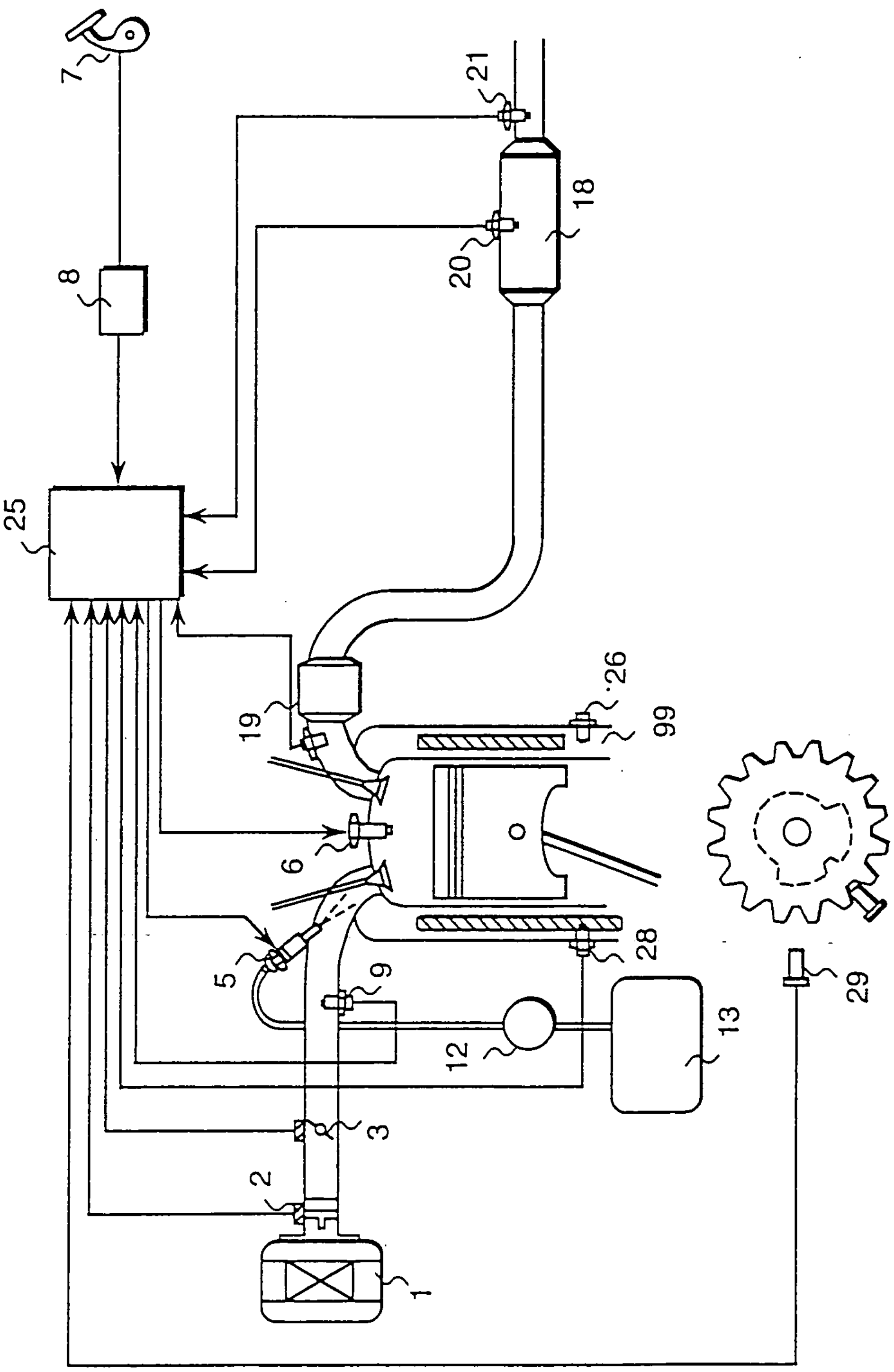

FIG. 15

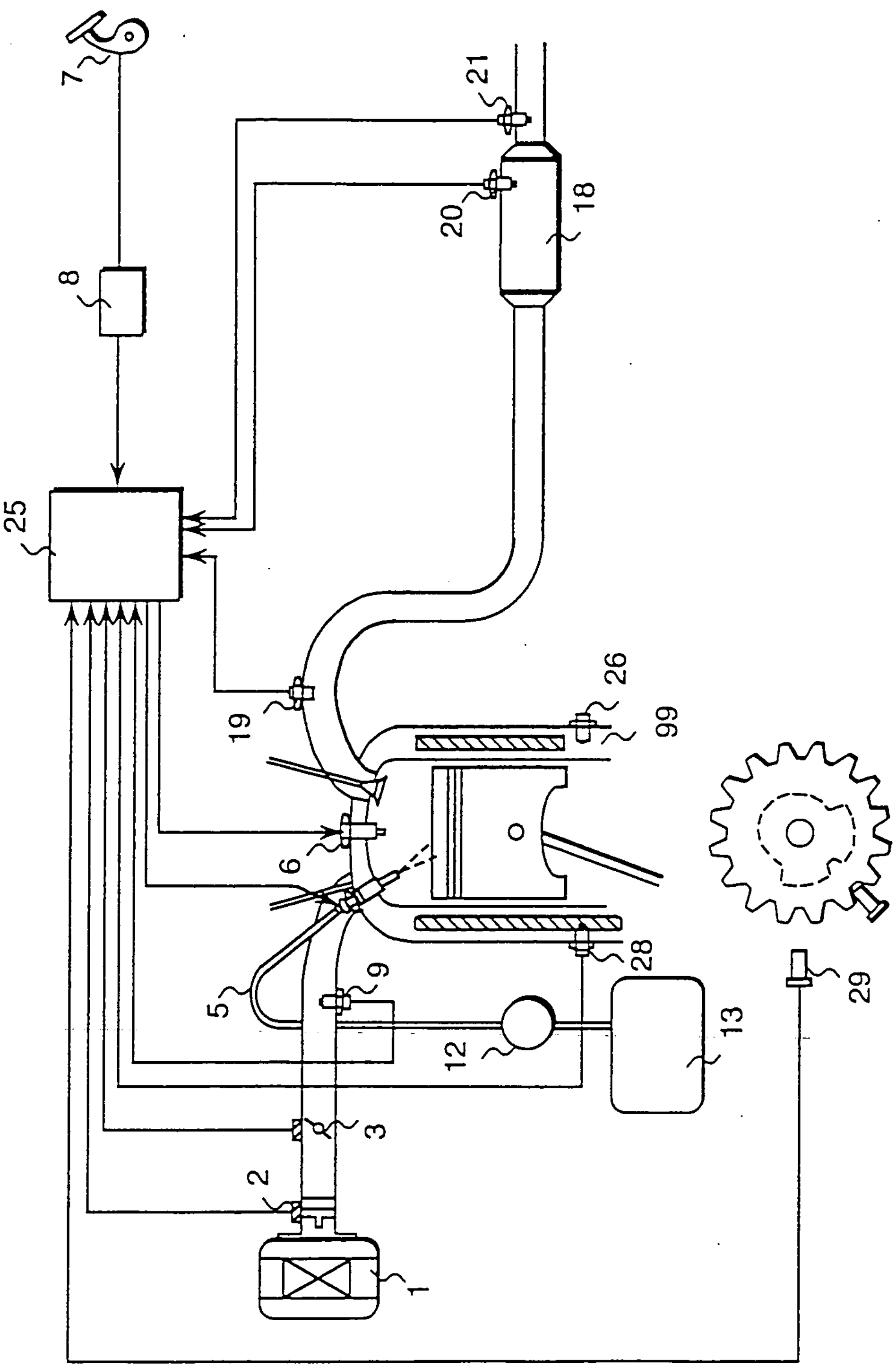

FIG. 16

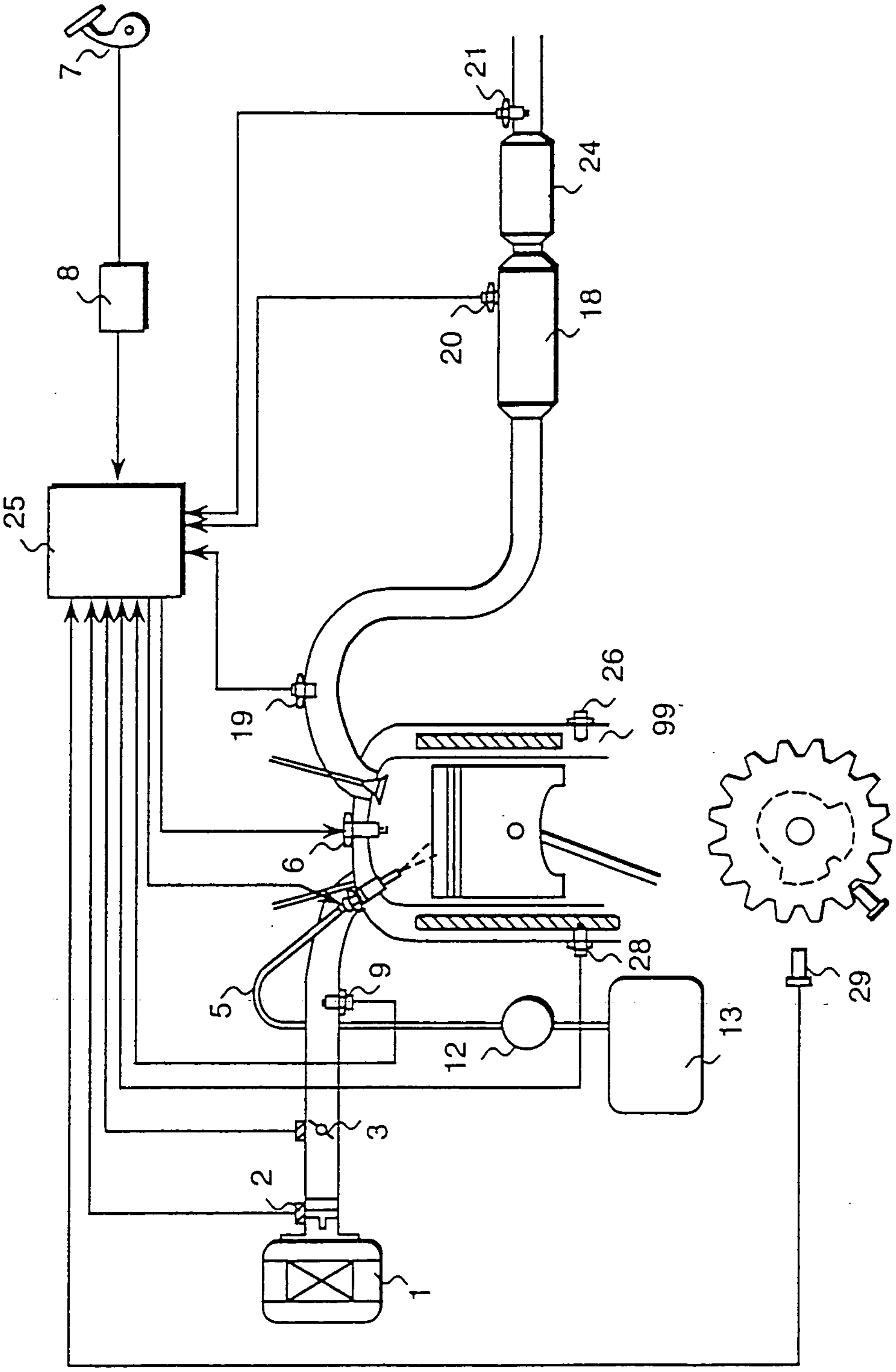

FIG. 17

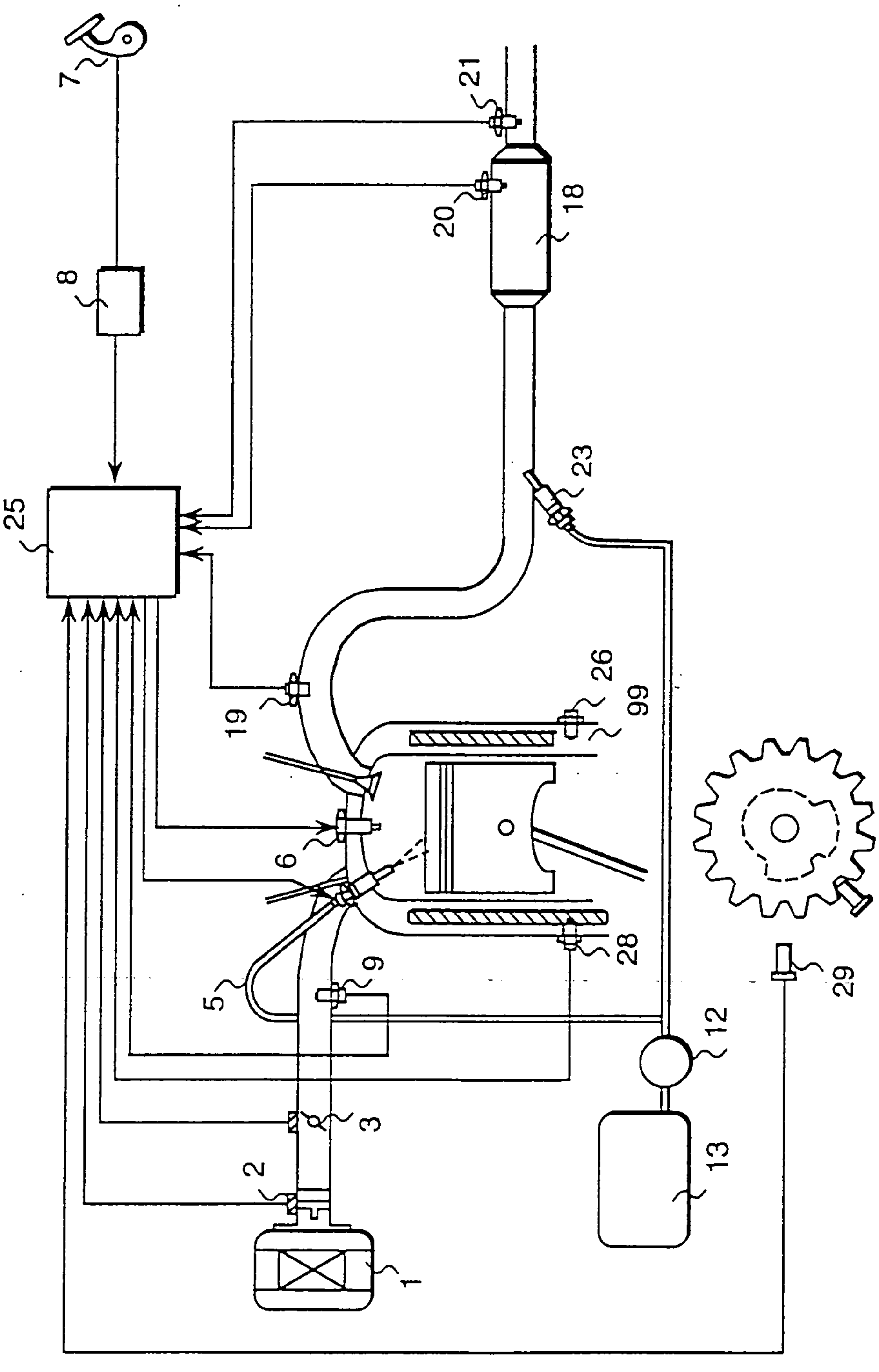

FIG. 18A

(a) ADSORPTION CATALYST N-N9

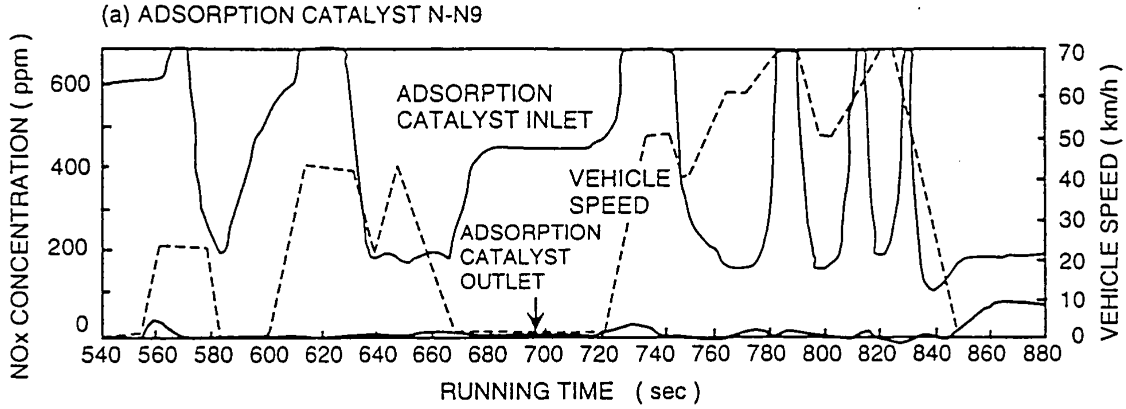


FIG. 18B

(b) ADSORPTION CATALYST N-K9

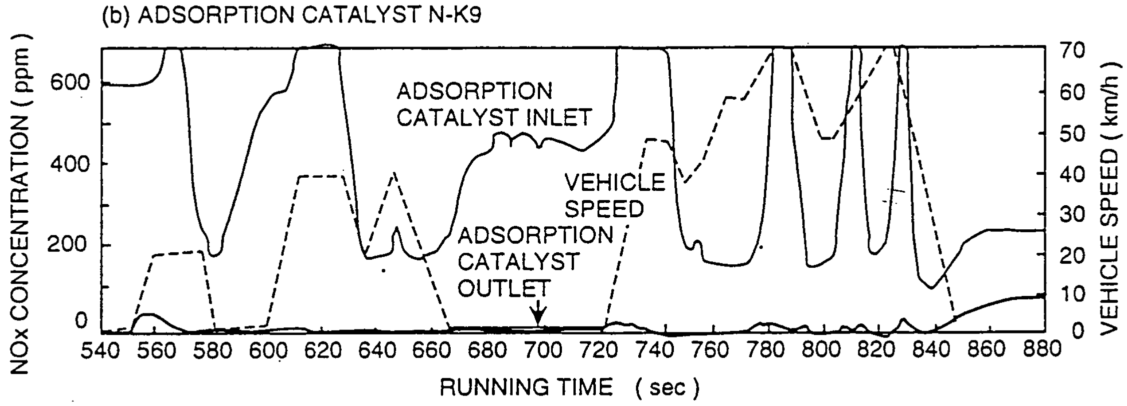


FIG. 18C

(c) COMPARISON CATALYST N-R2

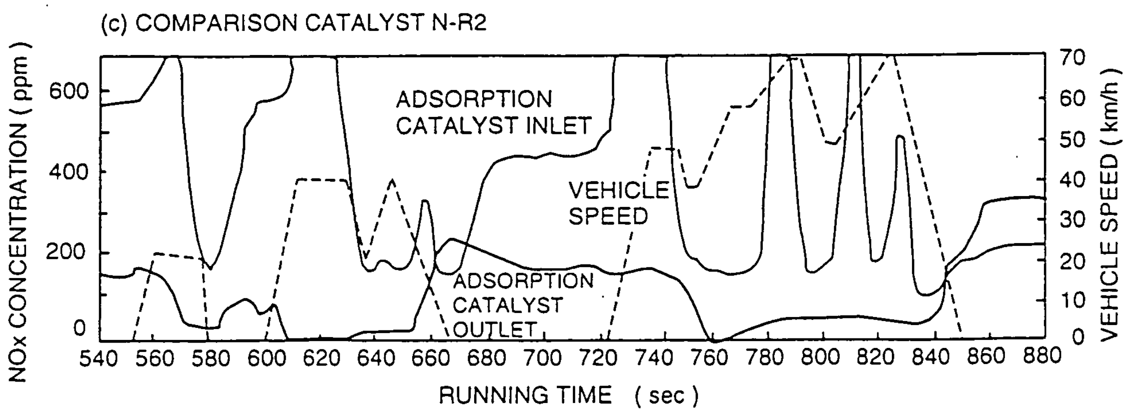

FIG. 19

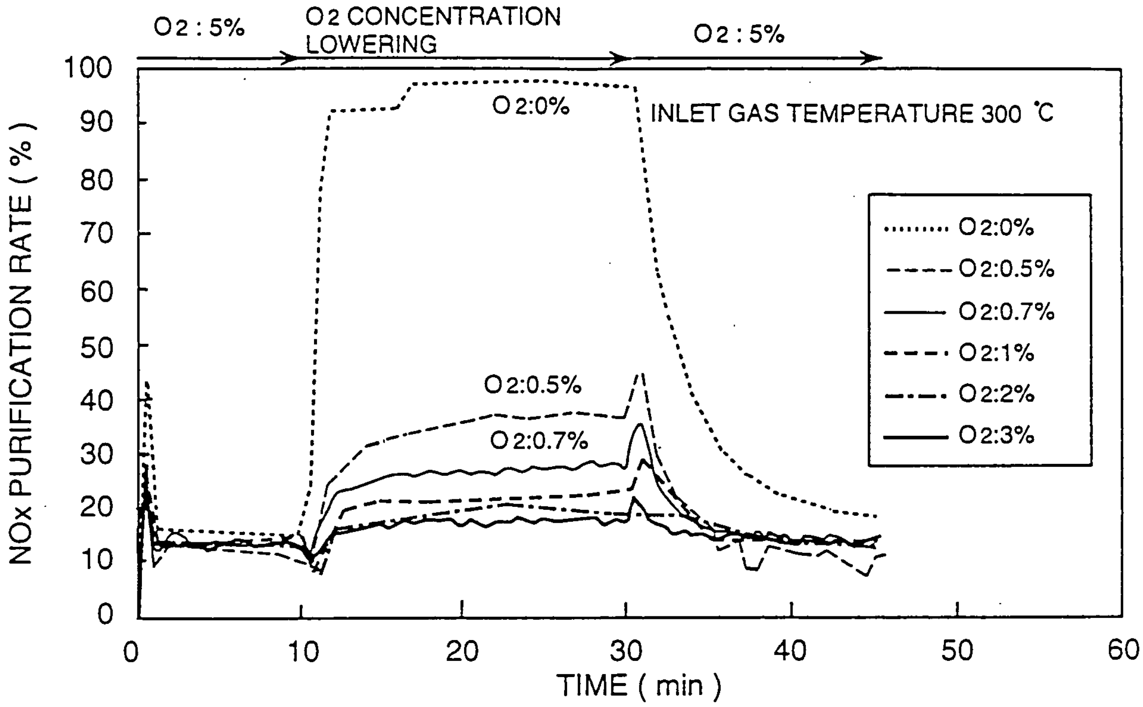
O2 : 5%
O2 CONCENTRATION LOWERING
O2 : 5%
INLET GAS TEMPERATURE 300 ℃
O2:0%
O2:0.5%
O2:0.7%
O2:0%
O2:0.5%
O2:0.7%
O2:1%
O2:2%
O2:3%
NOx PURIFICATION RATE ( % )
TIME ( min )
0
10
20
30
40
50
60
70
80
90
100
0
10
20
30
40
50
60

FIG. 20

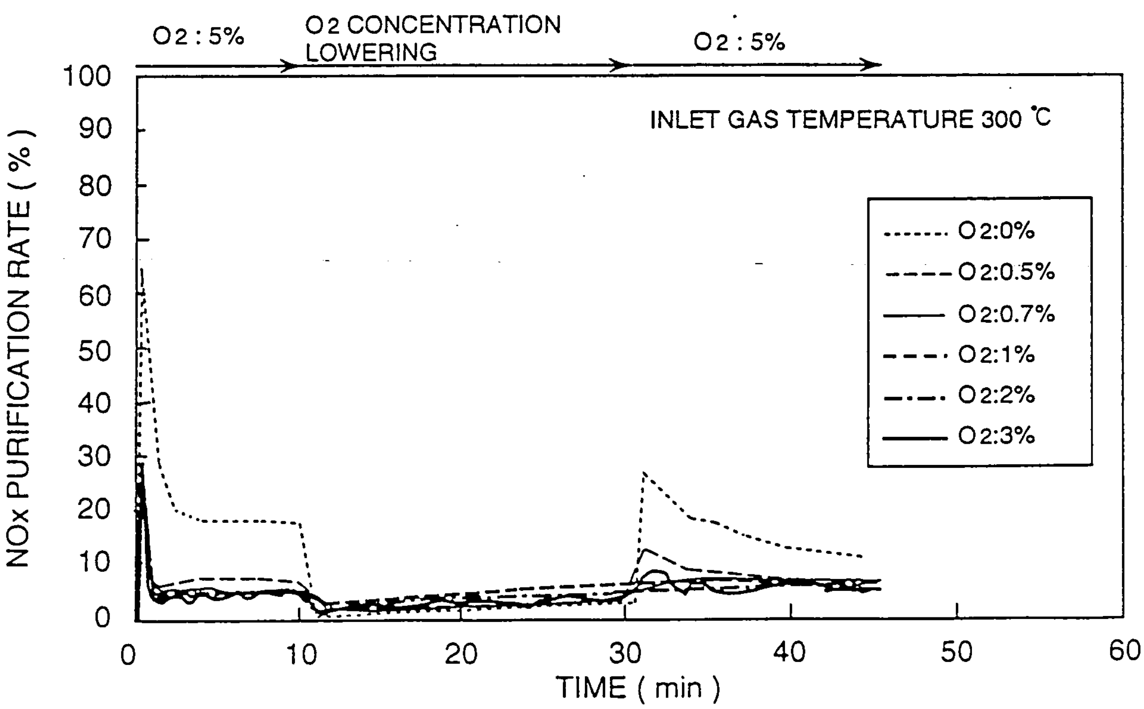
O2 : 5%
O2 CONCENTRATION LOWERING
O2 : 5%
INLET GAS TEMPERATURE 300 ℃
O2:0%
O2:0.5%
O2:0.7%
O2:1%
O2:2%
O2:3%
NOx PURIFICATION RATE ( % )
TIME ( min )
0
10
20
30
40
50
60
70
80
90
100
0
10
20
30
40
50
60

FIG. 21

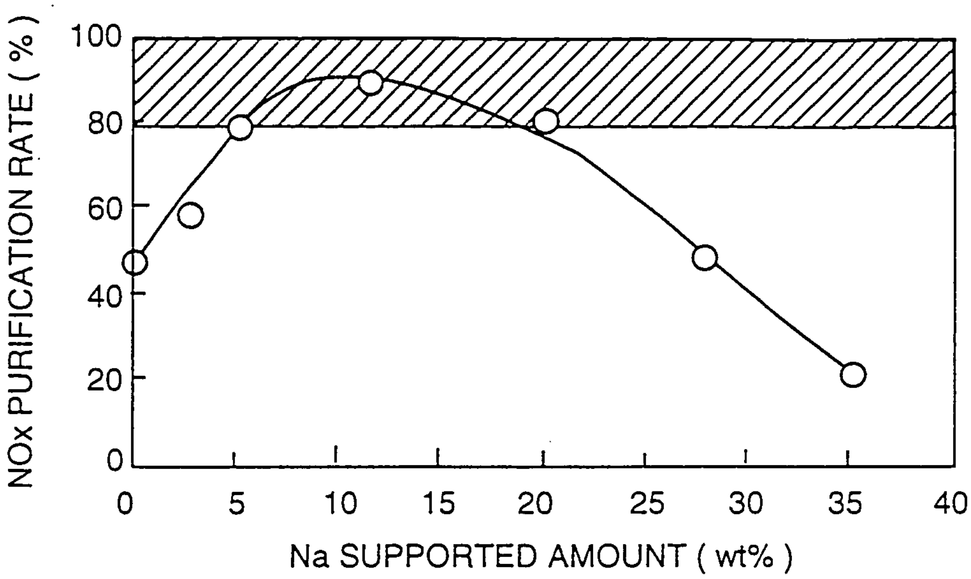
NOx PURIFICATION RATE ( % )
100
80
60
40
20
0
0 5 10 15 20 25 30 35 40
Na SUPPORTED AMOUNT ( wt% )

FIG. 22

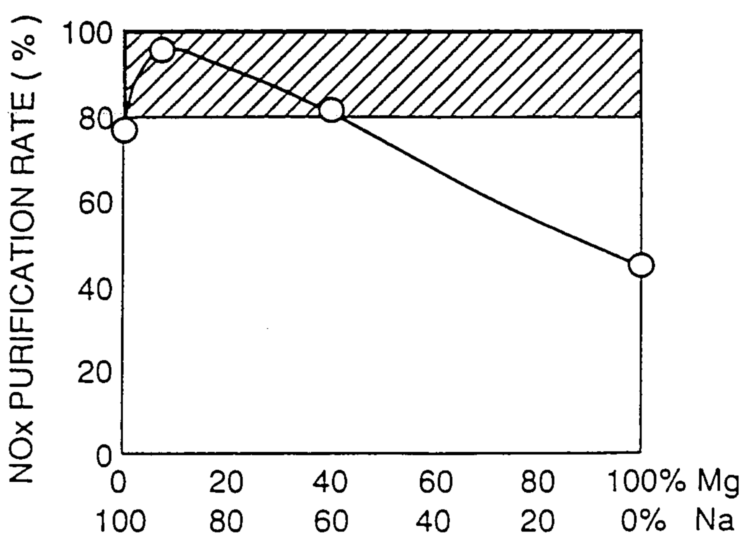
NOx PURIFICATION RATE ( % )
100
80
60
40
20
0
0 20 40 60 80 100% Mg
100 80 60 40 20 0% Na

FIG. 23

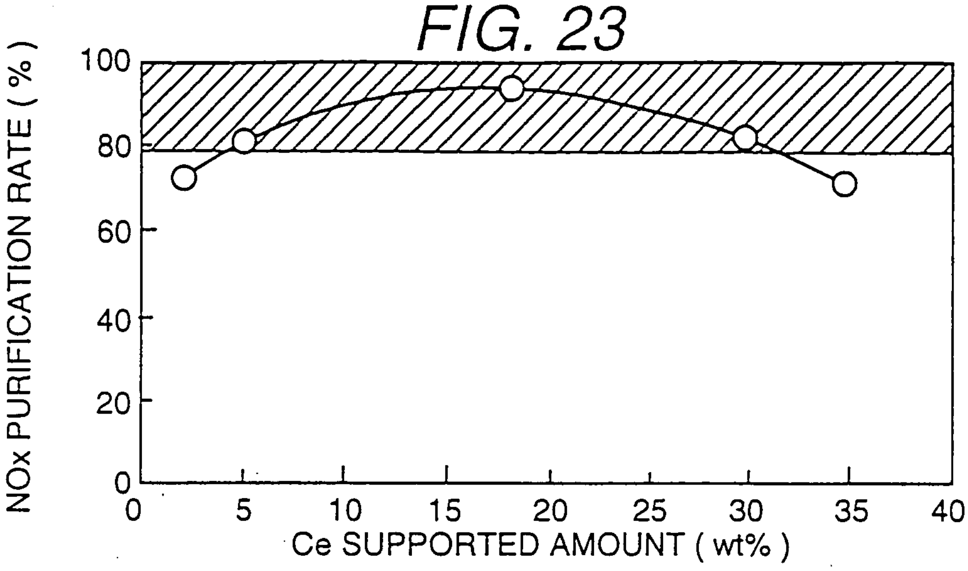
NOx PURIFICATION RATE ( % )
100
80
60
40
20
0
0
5
10
15
20
25
30
35
40
Ce SUPPORTED AMOUNT ( wt% )

FIG. 24

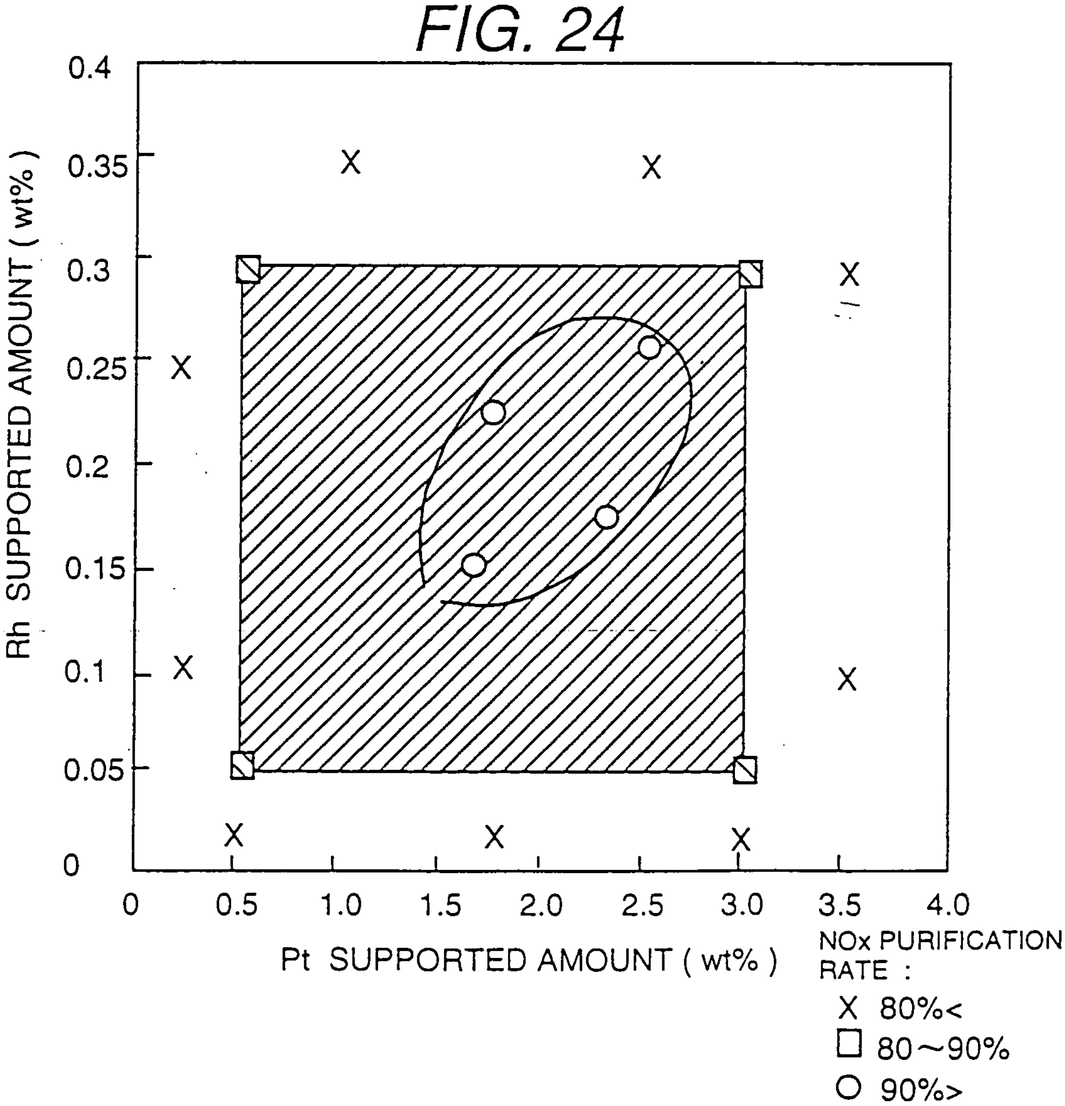
Rh SUPPORTED AMOUNT ( wt% )
0.4
0.35
0.3
0.25
0.2
0.15
0.1
0.05
0
0
0.5
1.0
1.5
2.0
2.5
3.0
3.5
4.0
Pt SUPPORTED AMOUNT ( wt% )
NOx PURIFICATION RATE :
X 80%<
□ 80～90%
O 90%>

FIG. 25

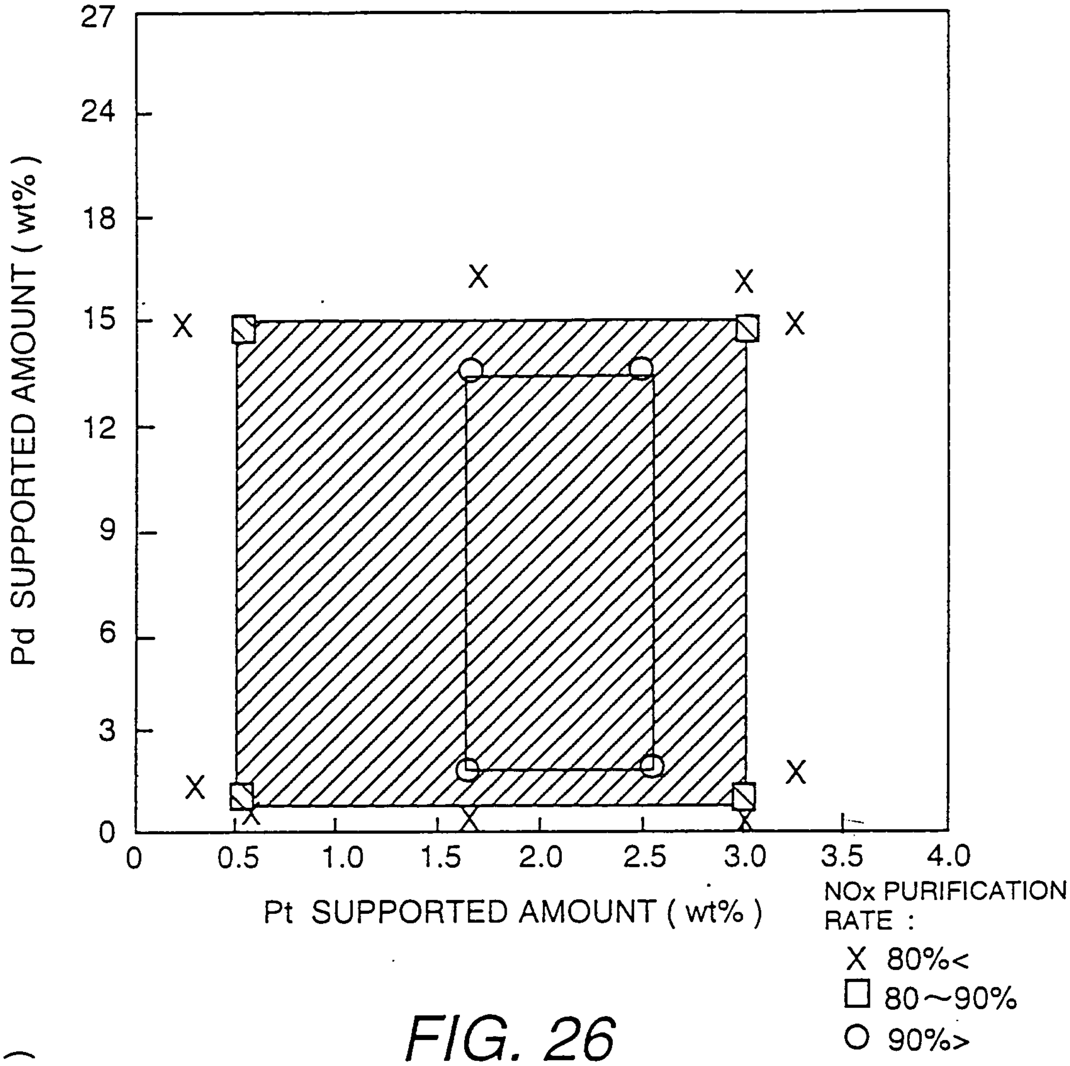
27
24
18
15
12
9
6
3
0
Pd SUPPORTED AMOUNT ( wt% )
0
0.5
1.0
1.5
2.0
2.5
3.0
3.5
4.0
Pt SUPPORTED AMOUNT ( wt% )
NOx PURIFICATION RATE :
X 80%<
□ 80～90%
O 90%>

FIG. 26

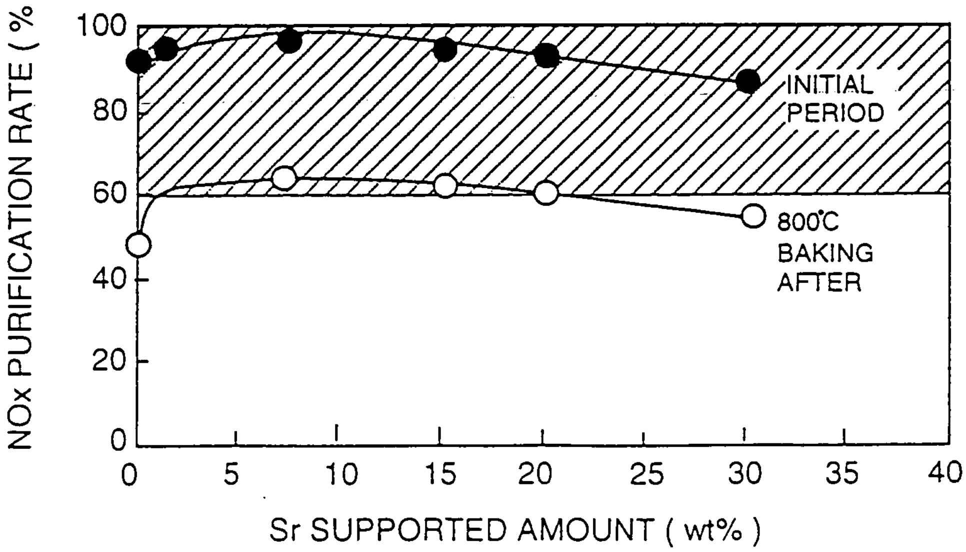
100
80
60
40
20
0
NOx PURIFICATION RATE ( % )
INITIAL PERIOD
800℃ BAKING AFTER
0
5
10
15
20
25
30
35
40
Sr SUPPORTED AMOUNT ( wt% )